# EUROPÄISCHE PATENTSCHRIFT

(11) **EP 3 430 362 B1**
(45) Veröffentlichungstag und Bekanntmachung des Hinweises auf die Patenterteilung: **22.04.2020**
(21) Anmeldenummer: 17712411.2
(22) Anmeldetag: 13.03.2017
(51) Int. Cl.: G01J 3/44, G01J 3/02

(54) **ANORDNUNG UND VERFAHREN ZUR RAMAN-SPEKTROSKOPIE**
ARRANGEMENT AND METHOD FOR RAMAN-SPECTROSCOPY
APPAREIL ET PROCÉDÉ DE SPECTROSCOPIE RAMAN

(30) Priorität: 14.03.2016 DE 102016003334
(43) Veröffentlichungstag der Anmeldung: 23.01.2019
(73) Patentinhaber: Universität Stuttgart, 70174 Stuttgart (DE)
(72) Erfinder: KÖRNER, Klaus, 10367 Berlin (DE); THIELE, Simon, 70372 Stuttgart (DE); HERKOMMER, Alois M., 73431 Aalen (DE)
(74) Vertreter: Müller-Boré & Partner Patentanwälte PartG mbB
(86) Internationale Anmeldenummer: PCT/EP2017/000328
(87) Internationale Veröffentlichungsnummer: WO 2017/157514

(56) Entgegenhaltungen:
- WO-A1-2012/149570
- DE-A1-102010 046 907
- DE-B4-102005 028 268
- US-B1- 8 873 041

## Beschreibung

### Stand der Technick

Es sind faserbasierte Anordnungen zur Raman-Spektroskopie bekannt, insbesondere für endoskopische Applikationen, bei denen mittels einer ersten Faser das Anregungslicht zur Probe geführt wird. Das Raman-Streulicht, welches unelastisch gestreut ist, wird mittels mindestens einer zweiten Faser, der Detektionsfaser, erfasst. Das Faserende mindestens einer Detektionsfaser befindet sich in der unmittelbaren Umgebung des Faserendes der ersten Faser. Dies wird im Detail für eine große Anzahl an Konfigurationen im Fachartikel von I. Latka, S. Dochow, C. Krafft, B. Dietzek und J. Popp mit dem Titel "Fiber optic probes for linear and nonlinear Raman applications - Current trends and future development" in Laser Photonics Rev. 7, No. 5, S. 698-731 (2013) DOI 10.1002/lpor.201200049 für mehrere Anwendungen beschrieben. Dabei wird von einer einzigen und unveränderlichen Anregungswellenlänge für das Raman-Streulicht ausgegangen. Über eine chromatische Tiefenaufspaltung von Foki (Fokussen) wird dort nicht berichtet.

Die Wellenlängen-durchstimmbare Raman-Spektroskopie ist bereits seit Jahrzehnten bekannt, s.a. US-Patent 5,373,358 von Y. Adachi und DE 10 2005 028 268 B4 von A. Klehr sowie die US-Patentanmeldung 2012/0203114 A1 von K. L. Bechtel u.a. Der Messort für die Raman-Spektroskopie wird jedoch bei diesen Ansätzen nicht aktiv oder vorbestimmt gesteuert verändert, sondern ist im Raum unveränderlich.

Im Fachartikel "Raman probes based on optically-poled double-clad fiber and coupler" von A. C. Brunetti, W. Margulis und K. Rottwitt in OPTICS EXPRESS Vol. 20, No. 27, S. 28563-28572 (2012) wird die Raman Spektroskopie mit einer Doppelmantel-Faser unter Verwendung eines Singlemode-Kerns als eine sehr vorteilhafte Methode beschrieben.

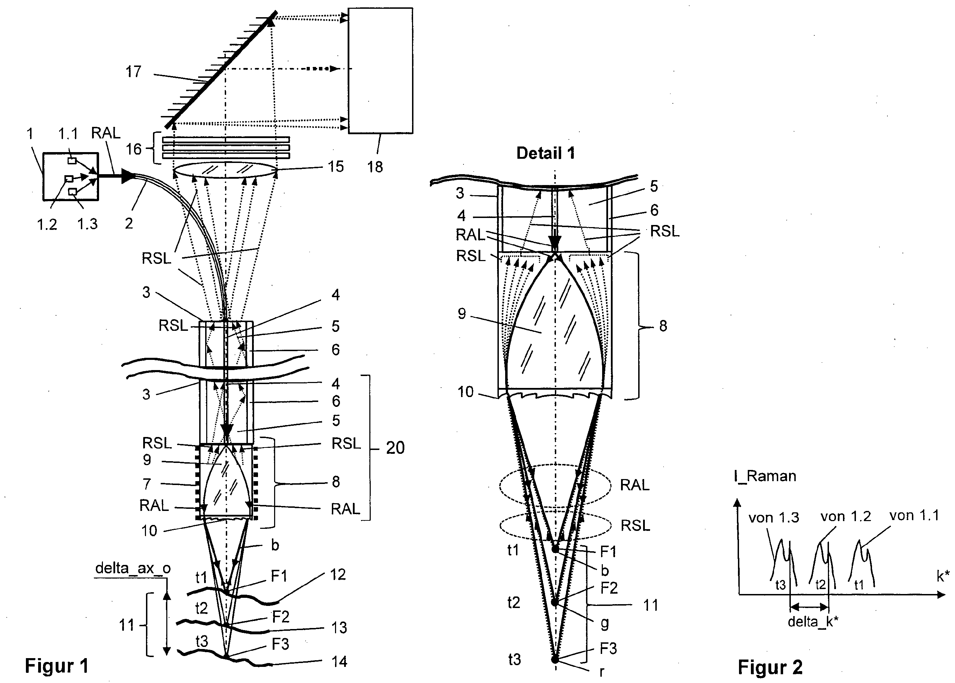

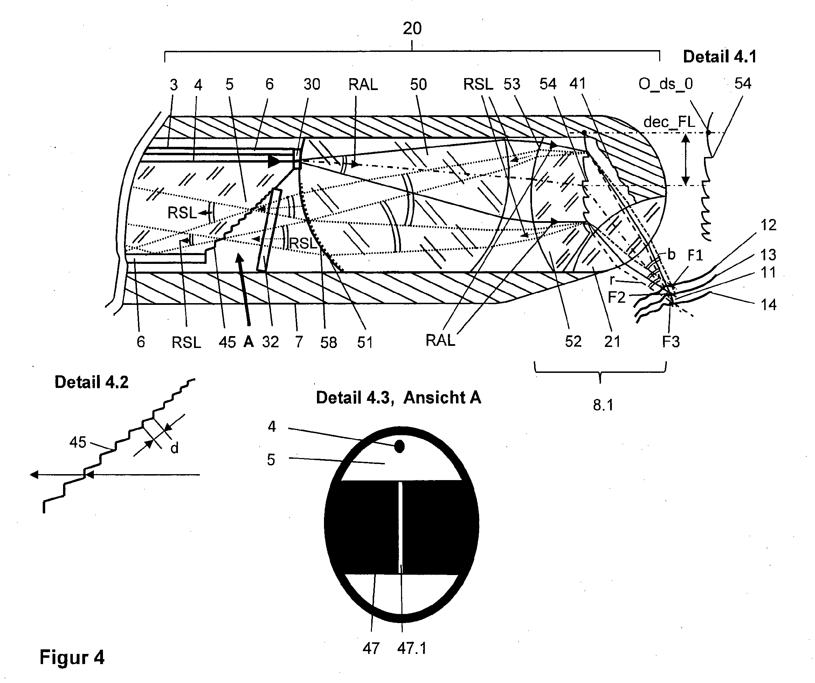

In der Schrift DE 10 2010 015 428 A1 wird die Nutzung eines chromatisch-konfokalen Sensors mit Weißlichtquelle und Spektrometer zur Oberflächenmessung und Fokus-Nachführung in einem konfokalen Raman-Mikroskop beschrieben. Im Ausführungsbeispiel gemäß Fig. 1 ist der chromatisch-konfokale Sensor jedoch separiert dargestellt und in Fig. 4 ist nur der Strahlengang eines Raman-Mikroskops skizziert. Eine Integration eines chromatisch-konfokalen Sensors in das Raman-Mikroskop wird im Absatz 0062 zwar vorgeschlagen, aber nicht weiter beschrieben. Das Anregungslicht von der Laserquelle 1000 wird hier ausschließlich im Raman-Mikroskop zur Raman-Anregung genutzt. Es gibt überhaupt keinen Hinweis, dieses auch zur chromatisch-konfokalen Oberflächen-Detektion zu nutzen. Das ist jedoch auch gut nachvollziehbar, da das Anregungslicht hier stillschweigend als monochromatisches Licht angenommen wird, wodurch keine chromatische Tiefenaufspaltung von Foki aufgrund der Monochromasie der Lichtquelle erfolgen kann und somit das chromatisch-konfokale Prinzip mittels monochromatischen Anregungslichts von der Laserquelle 1000 überhaupt nicht anwendbar ist. Eine Miniaturisierung dieses Ansatzes, wie es die Endoskopie im Tiefraum von humanem Gewebe oder bei Diagnostik in der Aorta eines lebenden Menschens erfordert, ist nicht möglich.

Die Ansätze mit chromatischer Tiefenaufspaltung von konfokalen Foki wurden ab 1984 von G. Molesini u. a. für die chromatisch-konfokale Mikroskopie eingeführt, s. G. Molesini, G. Pedrini, P. Poggi and F. Quercioli in "Focus wavelength encoded optical profilometer", Opt. Commun. 49, S. 229-233 (1984). Siehe dazu auch die Schriften GB 2144537 und DE 3428593 C2.

Im Fachaufsatz Chromatic confocal microscopy with microlenses von H. J. Tiziani, R. Achi und R. N. Krämer in Journal of Modern Optics Vol. 43, No. 1, S. 155-163 (1996) werden diffraktive Mikrolinsen in Zusammenwirken mit verschiedenen Laserwellenlängen zur chromatischen Fokussierung eingesetzt. Im Fachartikel "Nontranslational three-dimensional profilometry by chromatic confocal microscopy with dynamically configurable micromirror scanning" von S. Cha, P. C. Lin, L. Zhu, P.-Ch. Sun und Y. Feinman in Applied Optics, Vol. 39, No. 16, S. 2605 bis 2613 (2000) wird die Möglichkeit aufgezeigt, mittels einer Abbildungsstufe mit einer diffraktiven Linse eine chromatische Längsaberration, also eine Tiefenaufspaltung von Foki, zu erzielen.

In der US-Patentschrift US 7,952,719 B2 von J. F. Brennan III, wird in einem Katheter die Raman-Spektroskopie mit der optischen Kohärenz-Tomografie (OCT) gekoppelt. Letztere soll die Tiefenauflösung im Gewebe ermöglichen sowie auch der gleichzeitigen Gewinnung morphologischer Informationen von menschlichem Gewebe dienen.

In der Schrift US 8203708 B2 von E. S. Lee u.a. wird ein Ansatz zur spektral kodierten kohärenten Anti-Stokes Raman-Spektroskopie beschrieben (SE-CARS), bei dem die Foki von zwei getrennt zugeführten fasergekoppelten Strahlungsquellen mit jeweils unterschiedlicher Wellenlänge, nämlich ein Pump-Strahl und ein Stokes-Strahl, in einem einzigen gemeinsamen Ort im Objektraum vereinigt werden. Es wird die Koinzidenz der Foki von einem Pump-Strahl und einem Stokes-Strahl hergestellt auch bei synchroner Änderung der Wellenlängen von Pump-Strahl und Stokes-Strahl in einem limitierten Wellenlängenbereich. So kann eine begrenzte laterale Verschiebung zur Gewebe-Durchmusterung allein durch Ändern der Wellenlängen erreicht werden, was zur spektralen Ortsauflösung genutzt wird. In Verbindung mit einem mechanischen Scan ist somit eine spektrale Bildgebung möglich. Dazu werden auch diffraktive Mittel im Strahlengang sowie ein dichroitischer Spiegel eingesetzt. Es gibt jedoch nur eine vergleichsweise kleine laterale Ortsvariation der Strahlung des fokussierten Anregungslichts im Objektraum, also quer zur Achse einer eingesetzten GRIN-Linse und zwar eindimensional über einen vergleichsweise kleinen Ortsbereich, s. a. Seite 4, Zeile 64 bis Zeile 67 und Seite 5, Zeile 1 bis Zeile 15. Auf Seite 8, Zeile 44 wird das eindimensionale Bildfeld (Field of view) mit 23,5µm angegeben. In Figur 4 gibt es keinen Bezug auf einen Tiefen-Scan. Die GRIN-Linse hat dort eine feste Brennweite von 0,46 mm, wodurch keine Ortsvariation der Foki-Lagen in der Tiefe des Objektraumes möglich ist. Zur Detektion wird der Mantelbereich der Faser für das Stokes-Licht genutzt.

In der Schrift DE 10 2010 046 907 A1 wird ein Verfahren und eine Vorrichtung zur robusten One-Shot-Interferometrie (ROSI) mit einem Zweistrahl-Interferometer oder einer Vielzahl von Zweistrahl-Interferometern beschrieben. Die mit der Vorrichtung gewonnenen Messdaten können auf Basis der Ramanspektroskopie zur Generierung von weiteren Messdaten zur Erkennung von Tumorzellen genutzt werden. Im Objektstrahlengang ist ein brechkraftkompensiertes diffraktives Element angeordnet. Somit kann der Tiefenmessbereich durch chromatische Längsaberration um ein Mehrfaches gegenüber der wellenoptischen Schärfentiefenbereich vergrößert werden.

### Ziel der Erfindung

Ein Ziel der Erfindung besteht zum einen darin, auch unter den Bedingungen einer chirurgischen Operation am humanen Gewebe eine hohe Diagnose-Sicherheit, insbesondere bei der Tumor-Diagnostik von Mini-Tumoren, zu erreichen.

Ein weiteres Ziel besteht darin, minimal invasive Sensorik, insbesondere eine sehr schlanke Mess-Sonde, wie z. B. für die Raman-spektroskopische Untersuchung von Plaque in der Aorta oder anderen Arterien, insbesondere jeweils an der Schlagader-Innenwand, bereitzustellen.

Das allgemeine Ziel ist, Mittel für eine vergleichsweise Patienten-schonende Diagnostik auf der Basis der Raman-Spektroskopie bereitzustellen.

### Aufgabe der Erfindung

Es ist eine technische Aufgabe der vorliegenden Erfindung, beim optischen Antasten mit der Raman-Spektroskopie vergleichsweise schnell - in vivo und minimal invasiv, also auch sehr Patienten-schonend - Biospektren von Gewebe zu gewinnen.

Eine weitere technische Aufgabe besteht darin, eine Lehre für eine Raman-spektroskopische örtliche Durchmusterung, insbesondere auch mit Tiefenauflösung, im Gewebe eines lebenden Körpers zu geben. Im Speziellen sollen mittels tiefenaufgelöster Raman-Spektroskopie Informationen über Plaques in vivo in der Aorta und in Arterien gewonnen werden können.

Des Weiteren soll eine Raman-spektroskopische Tiefen-Durchmusterung, insbesondere in der mikroskopischen Skala von Proben aller Art, auch aus den Materialwissenschaften und der Materialerkundung, ermöglicht werden.

Die obigen Aufgaben werden durch ein Verfahren und eine Anordnung zur Raman-Spektroskopie nach den unabhängigen Ansprüchen gelöst. Bevorzugte Ausführungsformen sind Gegenstand der abhängigen Ansprüche.

### Einsatzgebiete der erfinderischen Lösung

Einsatzgebiete der vorliegenden Erfindung umfassen beispielsweise:
- In vivo Diagnostik in der Aorta und in Arterien,
- Tumor-Diagnostik auch z.B. an humanem Gewebe, auch insbesondere Lebergewebe, auch in der Prostata, an Lungen- und Magengewebe und auch im Tiefgewebe der weiblichen Brust,
- Untersuchungen an lebenden Zellen, insbesondere auch Tumorzellen,
- biologische und medizinische Grundlagenforschung zur Untersuchung biologischer Objekte,
- Langzeit-Stoffwechsel-Untersuchungen mit stationärer Sensorik, insbesondere auch bei Medikamenten-Gaben, auch in der Tiermedizin,
- Untersuchungen von technischen Materialien, insbesondere mit der Messung von Raman-Spektren in verschiedenen Tiefen.

### Beschreibung der Erfindung

Hier werden die Begriffe Licht und Strahlung stets als Synonym für elektromagnetische Strahlung vom Infrarot- bis zum tiefen UV-Bereich verwendet. Die Begriffe Beleuchtung und Bestrahlung werden hier als gleichbedeutend angesehen. Weiterhin wird Raman-Streulicht, beziehungsweise Raman-gestreutes Licht, den Begriffen unelastisch gestreute Raman-Strahlung oder auch Raman-verschobene, rückgestreute elektromagnetische Strahlung gleichgesetzt. Raman-Anregungslicht wird als gleichbedeutend für Raman-Anregungsstrahlung verwendet.

Es wird in dieser Schrift von folgendem Ansatz ausgegangen: Der Strahlengang für die Beleuchtung mit Raman-Anregungslicht muss geometrisch-optisch nicht die beste Energieeffizienz aufweisen, da in der Regel genügend Laserleistung zur Verfügung steht, mit welcher beispielsweise der Effekt einer suboptimalen Apertur im Beleuchtungsstrahlengang in weiten Grenzen ausgeglichen werden kann. So kann auch der im Beleuchtungsstrahlengang erfasste Aperturwinkel vergleichsweise klein oder der Beleuchtungs-Aperturkegel etwas asymmetrisch sein, um den Durchmesser einer Raman-Sonde zu reduzieren. Dagegen sollte der Strahlengang für das Raman-Streulicht möglichst effizient ausgebildet sein, da dies dazu beitragen kann, den Energieeintrag in das Messobjekt, z.B. menschliches Gewebe, signifikant zu reduzieren.

Es handelt sich um ein Verfahren zur Raman-Spektroskopie mit mindestens einer Raman-Anregungslichtquelle oder einem Raman-Anregungslichtquellen-System und mit mindestens einer Fokussier-Optik und einem Spektrometer, welchem die unelastisch gestreute Raman-Strahlung RSL zur Bestimmung von Raman-Spektren zugeführt wird.

Dabei ist hier neben der spontanen Raman-Spektroskopie die kohärente Raman-Spektroskopie, auch als "coherent anti-Stokes Raman Scattering" (CARS) bekannt, ausdrücklich eingeschlossen.

Die Fokussier-Optik ist sowohl zur Erzeugung fokussierter Raman-Anregungsstrahlung zwecks Beleuchtung des Objektraumes als auch zur Erfassung der unelastisch gestreuten Raman-Strahlung aus dem Objektraum ausgebildet.

Erfindungsgemäß wird ein Verfahren zur Raman-Spektroskopie nach Anspruch 1 bereitgestellt. Das Verfahren umfasst die Schritte:
- Bereitstellen monochromatischer oder zumindest quasi-monochromatischer elektromagnetischer Strahlung mittels Raman-Anregungslichtquelle oder Raman-Anregungslichtquellen-System zur Raman-Anregung zum bzw. durch Bestrahlen
   - entweder mit mindestens zwei unveränderlichen diskreten Schwerpunktwellenlängen gleichzeitig;
   - oder mit mindestens zwei unveränderlichen diskreten Schwerpunktwellenlängen zeitlich nacheinander;
   - oder mit Wellenlängen-Durchstimmung,
- Ausbreiten der Raman-Anregungsstrahlung in optischem Kontakt mit einer ersten Einrichtung bzw. mit Mitteln zur chromatischen Tiefenaufspaltung von Foki oder fokussierten Bereichen,
- Bilden entweder zeitgleich oder zeitlich nacheinander von mindestens zwei räumlich verteilten Foki oder fokussierten Bereichen durch spektrales Zerlegen mit chromatischer Tiefenaufspaltung im Objektraum mit der ersten Einrichtung bzw. mit den Mitteln zur chromatischen Tiefenaufspaltung,
- Erfassen der unelastisch gestreuten Raman-Strahlung,
- Zuführen der unelastisch gestreuten Raman-Strahlung zum Spektrometer,
- Detektieren der unelastisch gestreuten Raman-Strahlung mittels des Spektrometers
- und Bestimmen und Auswerten der Signale.

Des Weiteren erfolgt bevorzugt ein Passieren mindestens der ersten und/oder einer zweiten Einrichtung zur chromatischen Tiefenaufspaltung bzw. mindestens eines Mittels zur chromatischen Tiefenaufspaltung von unelastisch in Richtung des Spektrometers gestreuter Raman-Strahlung. Beim bevorzugten Passieren mindestens der ersten und/öder einer zweiten Einrichtung zur chromatischen Tiefenaufspaltung bzw. mindestens eines Mittels zur chromatischen Tiefenaufspaltung - nun durch die in den Foki erzeugte Raman-Streustrahlung - erfolgt dabei zumindest für einen Teil der unelastisch gestreuten Raman-Strahlung vorzugsweise eine teilweise Kompensation der Tiefenaufspaltung der Foki der Raman-Anregungsstrahlung des Hinlaufs. Bevorzugt handelt es sich um dieselben Elemente bzw. Mittel zur chromatischen Tiefenaufspaltung des Hinlaufs der Raman-Anregungsstrahlung, da die Nutzung derselben Mittel in der Regel eine Miniaturisierung der Anordnung sehr unterstützt. Mit anderen Worten passiert die in den Foki-erzeugte Raman-Streustrahlung vorzugsweise durch dieselben Elemente bzw. durch dieselbe (erste) Einrichtung zur chromatischen Tiefenaufspaltung wie die Raman-Anregungsstrahlung. Es müssen jedoch nicht dieselben Einrichtungen bzw. Mittel sein. Die in den Foki-erzeugte Raman-Streustrahlung kann z.B. durch eine andere (zweite) Einrichtung zur chromatischen Tiefenaufspaltung passieren. Die zweite Einrichtung zur chromatischen Tiefenaufspaltung kann z.B. Elemente bzw. Mittel mit der Wirkung einer Tiefenaufspaltung von Foki umfassen, welche die Tiefenaufspaltung auf dem Weg zur Detektion kompensieren. Es können aber auch bevorzugt zum Kompensieren der Tiefenaufspaltung der Foki der Raman-Anregungsstrahlung andere chromatische Elemente bzw. Mittel für die unelastisch gestreute Raman-Strahlung eingesetzt werden. Dabei ist diesen Elementen bzw. Mitteln bevorzugt ein Farbteiler in Strahlrichtung zum Abtrennen von Raman-Streustrahlung zwecks Zuführen zur Detektion vorgeordnet. Dieser Farbteiler ist bevorzugt als Schichten-Strahlteiler ausgebildet. Die chromatischen Elemente bzw. Mittel können eine tiefenaufspaltende Wirkung aufweisen, welche bei bereits tiefenaufgespaltener Strahlung nun für eine zumindest teilweise Kompensation der Tiefenaufspaltung genutzt werden kann. Diese Verringerung der Tiefenaufspaltung für die Raman-Streustrahlung wird hier als Achromatisierung bezeichnet.

Es ist bekannt, dass die Wirkung einer Tiefenaufspaltung bei bereits tiefenaufgespaltener Strahlung auch zur Zurücknahme der Tiefenaufspaltung führen kann. Darum handelt es sich hier bei der Raman-Streustrahlung. Zumindest teilweise wird so die Tiefenaufspaltung in Abhängigkeit von der Wellenlänge im Hinlauf der Raman-Anregungsstrahlung für die Raman-Streustrahlung - zumindest für einen Teil derselben - wieder etwas reduziert.

Passiert die Raman-Streustrahlung durch dieselbe Einrichtung bzw. dieselben Mittel mit chromatischer Tiefenaufspaltung wie die Raman-Anregungsstrahlung erfolgt die Zurücknahme der Tiefenaufspaltung jedoch nicht vollständig wegen der im Objektraum stattgefundenen Wellenlängenverschiebung der Raman-Streustrahlung gegenüber der Raman-Anregungsstrahlung. Die Reduktion der Tiefenaufspaltung besteht deshalb also nur teilweise.

Durch zusätzliche achromatisierende Elemente bzw. Mittel im Detektionsstrahlengang für die Raman-Streustrahlung kann die Tiefenaufspaltung noch weiter verringert werden, so dass die Foki der Raman-Streustrahlung sich in der Tiefe annähern. Diese Annäherung vereinfacht eine konfokale Diskriminierung der Raman-Streustrahlung oder macht diese überhaupt erst möglich.

Vorzugsweise erfolgt beim Wellenlängen-Durchstimmen der Raman-Anregungsstrahlung ein Halten derselben bei mindestens zwei diskreten Schwerpunktwellenlängen - wenigstens für die Dauer der Detektion von Raman-Streulicht mittels eines Spektrometers. Dieses Raman-Anregungslicht bleibt bei der Detektion mittels Spektrometer unveränderlich hinsichtlich seiner angefahrenen Schwerpunktwellenlänge. Der Detektionszeitraum kann dabei in der Größenordnung von wenigen Millisekunden bis zu einigen Sekunden liegen. Das Wellenlängen-Durchstimmen kann sehr schnell erfolgen, da in dieser Zeit keine Detektion von Raman-Streulicht mittels Spektrometer erfolgt. Die bei der Detektion angefahrenen Schwerpunktwellenlängen können je nach Aufgabenstellung in weiten Grenzen gewählt werden. Dabei ist es auch möglich, dass die Wellenlänge über der Zeit bevorzugt in Form einer Treppenkurve durchgestimmt wird und die Anzahl der Haltestufen und der Bereiche eines kontinuierlichen Wellenlängendurchstimmens mindestens zwei betragen kann.

Die Raman-Anregungsstrahlung passiert im Hinlauf zu den Foki im Objektraum entweder durch eine spektral zerlegende Einrichtung bzw. durch spektral zerlegende Mittel zur chromatischen Tiefenaufspaltung und die Fokussier-Optik oder durchläuft eine Fokussier-Optik mit einer spektral zerlegenden Einrichtung bzw. mit spektral zerlegenden Mitteln, so dass Foki von Licht unterschiedlicher Wellenlänge in der Tiefe separiert werden. Die in den Foki aus der Raman-Anregungsstrahlung entstehende unelastisch gestreute Raman-Strahlung passiert durch dieselbe Fokussier-Optik und bevorzugt auch durch dieselben spektral zerlegenden Elemente bzw. Mittel jedoch in entgegengesetzter Ausbreitungsrichtung. Durch die Raman-Wellenlängen-Verschiebung weicht der Laufweg der unelastisch gestreuten Raman-Strahlung dann von der der Raman-Anregungsstrahlung nach Passieren der spektral zerlegenden Einrichtung bzw. Mittel zur chromatischen Tiefenaufspaltung etwas ab, so dass eine Separierung und Zuführung der unelastisch gestreuten Raman-Strahlung zur Detektion mittels Spektrometer möglich ist.

Bevorzugt ist es möglich, das Raman-Anregungslichtquellen-System mit drei Raman-Anregungs-Wellenlängen, beispielsweise mit Wellenlängen von 785nm, 795nm und 805nm, sequenziell einzuschalten, d.h. es gibt in diesem Fall drei Raman-Anregungswellenlängen und somit drei unterschiedliche Tiefen für die Foki oder fokussierten Bereiche. Andererseits können bevorzugt die drei schaltbaren Lichtquellen mit 785nm 795nm, 805nm Wellenlänge im Messvorgang stets gleichzeitig in Betrieb sein, so dass sich die die Foki oder fokussierten Bereiche zeitgleich ausbilden. Auch das Durchstimmen einer Wellenlängen-durchstimmbaren Lichtquelle, beispielsweise unter Nutzung eines wellenlängen-durchstimmbaren Lasers, ist bevorzugt möglich, um unterschiedliche Foki oder fokussierten Bereiche sequenziell zu adressieren.

Die Signalauswertung der Raman-Spektren erfolgt mittels digitaler Rechentechnik und Auswerteprogrammen, die entweder ein Bestandteil des Spektrometers oder diesem zugeordnet sein können.

Es handelt sich hier bei der unelastisch gestreuten Strahlung bevorzugt um Stokes-Strahlung. Es kann sich aber auch durchaus um Anti-Stokes-Strahlung handeln. Diese weist den gleichen Betrag der Raman-Verschiebung auf. Das Vorzeichen ist jedoch verschieden.

Erfindungsgemäß werden die tiefenaufgespaltenen Foki oder die tiefenaufgespaltenen fokussierten Bereiche der Raman-Anregungsstrahlung auch mit lateraler Komponente zur Strahlenausbreitungsrichtung im Objektraum separiert. Es besteht neben der Tiefenaufspaltung bevorzugt auch eine vorbestimmte chromatische Queraberration bzw. eine laterale chromatische Aufspaltung, wie z.B. eine chromatische Aberration bzw. Aufspaltung in einer zur Strahlenausbreitungsrichtung senkrechten oder geneigten Ebene. Die chromatische Queraberration bzw. Aufspaltung von Foki wird auch als "lateral color" bezeichnet. Mit diesem Ansatz der vorzugsweise zusätzlich eingeführten chromatischen Queraberration, bzw. der lateralen Color - auf dem optischen Weg von der Quelle der elektromagnetischen Strahlung bis zu den Foki im Objektraum - gibt es sowohl eine Tiefenaufspaltung als auch eine laterale Aufspaltung von Foki oder fokussierten Bereichen. In diesem Fall des Vorhandenseins von chromatischer Queraberration liegt die Fokuskette geneigt zur optischen Achse des Beleuchtungsstrahlenganges im Objektraum.

Diese chromatische Queraberration, auch im Sinne von "lateral color", kann auch vorbestimmt in einer hyperchromatischen, z.B. rein refraktiven Fokussieroptik ausgebildet sein. Eine hyperchromatische Fokussieroptik ist eine Optik, die in Abhängigkeit von der Lichtwellenlänge eine vorbestimmte, vergleichsweise große Separierung bzw. Aufspaltung von Foki erzeugt, deren Lage weit von der üblichen chromatischen Foki-Aufspaltung an einer Einzellinse abweicht.

Chromatische Aberrationen in optischen Systemen sind im Allgemeinen unerwünschte Bildfehler und werden durch unterschiedlichen Maßnahmen so weit wie möglich unterdrückt. So zeichnen sich achromatische Systeme dadurch aus, dass die Fokusaufspaltung für zwei Wellenlängen gegen Null betragen kann. Hyperchromatische Optiken bzw. Fokussieroptiken zeichnen sich dagegen dadurch aus, dass eine chromatische Aberration - in der Regel der Farblängsfehler - bewusst vergrößert bzw. maximiert wird. Die chromatische Längsaberration ist bei diesen Systemen kein unerwünschter Abbildungsfehler, sondern eine besondere Eigenschaft des jeweiligen Systems.

In der Regel erfolgt im Stand der Technik eine Tiefenaufspaltung von Foki. Jedoch kann auch eine besonders starke, chromatisch verursachte Queraberration mittels spezieller hyperchromatischer Fokussieroptik umfassend dezentrierte Elemente refraktiver oder diffraktiver Art erzeugt werden. In einer Ausführungsform der Erfindung werden mittels einer hyperchromatischen Fokussieroptik chromatischen Queraberrationen erzeugt.

In jedem Fall dient die chromatische Queraberration dem Entkoppeln der unelastisch gestreuten Raman-Strahlung von der Raman-Anregungs-Strahlung bei der Ausbreitung der unelastisch gestreuten Raman-Strahlung in Richtung des Ortes der Detektion, welche durch ein Spektrometer erfolgt.

Von Vorteil ist es, wenn beim Verfahren zur Raman-Spektroskopie am Objekt unelastisch gestreute Raman-Strahlung vor der Detektion mittels des Spektrometers vorzugsweise zumindest teilweise konfokal diskriminiert wird.

Damit wird Licht außerhalb des Fokusbereiches weitgehend von der Detektion ausgeschlossen und so kann das Raman-Signal dem Fokusbereich räumlich zugeordnet werden. Dabei kann durch licht-abschattende Elemente bzw. Mittel die am Objekt unelastisch gestreute Raman-Strahlung zumindest teilweise konfokal diskriminiert werden. Die licht-abschattenden Elemente bzw. Mittel werden bevorzugt mittels 2-Photonenlithografie hergestellt.

Weiterhin wird bevorzugt eine Notch-Filterung der unelastisch gestreuten Raman-Strahlung mit einem optischen Notch-Filter oder Notch-Filtersystem bzw. mit optischen Mitteln im Detektionsstrahlengang durchgeführt, um die Raman-Anregungs-Strahlung zu unterdrücken.

Eine starke Verringerung des Bauraumes einer Sonde, insbesondere des Durchmessers, kann erreicht werden, wenn beim Verfahren zur Raman-Spektroskopie die Beleuchtung mit Raman-Anregungs-Strahlung vorzugsweise mittels des Faser-Kernbereichs einer Doppel-Mantel-Faser und die Erfassung von unelastisch gestreuter Raman-Strahlung mittels des inneren Faser-Mantelbereichs dieser Doppel-Mantel-Faser durchgeführt wird.

Dabei ist es von Vorteil, wenn eine konfokale Diskriminierung mittels lichtabschattender Elemente bzw. Mittel zumindest näherungsweise auf einer Querschnittsfläche des inneren Mantels einer Doppel-Mantel-Faser durchgeführt wird. Diese Querschnittsfläche kann eine Außenfläche der Faser darstellen, aber auch eine innere, in ein optisches Medium eingebettete Fläche sein.

Weiterhin kann beim Verfahren zur Raman-Spektroskopie bevorzugt eine zumindest teilweise Fokussierung von unelastisch gestreuter Raman-Strahlung zumindest in einem geometrischen Teilbereich im Detektionsstrahlengang durch diffraktive Elemente bzw. Mittel durchgeführt werden.

Die diffraktiven Elemente bzw. Mittel dienen der Verkleinerung des Fokusflecks von nur unzureichend fokussierter unelastisch gestreuter Raman-Strahlung im Detektionsstrahlengang. Diese diffraktiven Elemente bzw. Mittel verringern die chromatischen Querablagen und die chromatischen Längs-Ablagen, welche die unelastisch gestreute Raman-Strahlung vor der konfokalen Diskriminierung noch aufweist. Damit kann die konfokale Diskriminierung wesentlich effektiver werden. Dabei entspricht eine chromatische Längs-Ablage einer chromatischen Tiefenaufspaltung. Die hierzu eingesetzten diffraktiven Elemente bzw. Mittel werden bevorzugt ganz oder teilweise mittels additiver Fertigung, insbesondere mittels 2-Photonenlithografie, hergestellt. Dabei werden diese auf optische Komponenten wie Linsen- oder Prismenflächen aufgebracht.

Bei dem Verfahren zur Raman-Spektroskopie wird vorzugsweise eine zumindest teilweise linienhafte Fokussierung von unelastisch gestreuter Raman-Strahlung zumindest in einem geometrischen Teilbereich im Detektionsstrahlengang durch achromatisierende Komponente bzw. Mittel durchgeführt.

Unter achromatisierenden Komponenten bzw. Mitteln werden Komponenten verstanden, welche die Foki verschiedener Wellenlängen, die lateral oder in der Tiefe separiert sind, räumlich näher bei der Detektion zusammenbringen. Die achromatisierenden Komponenten bzw. Mittel weisen diffraktiv-optische Elemente auf. Im einfachsten Fall kann es sich dabei um ein Linien-Phasen-Gitter handeln, welches unelastisch gestreute Raman-Strahlung in Abhängigkeit von der Wellenzahl k* beugt und somit Foki verschiedener Wellenzahlen k* durch wellenzahlabhängige Beugungswinkel bei der Detektion noch näher zusammenbringt, so dass eine konfokale Diskriminierung mittels einer vergleichsweise feinen Blende, bevorzugt eine Spaltblende, erfolgen kann. Eine bessere Fokussierung von unelastisch gestreuter Raman-Strahlung unterschiedlicher Wellenlängen kann auch durch die Anordnung eines Gitterprismas erreicht werden, welches eine Kombination aus einem Gitter und einem Prisma darstellt. Achromatisierende Mittel können auch als zentrierte oder dezentrierte Gitterlinsen ausgebildet sein. Die Gitter-Prismen und Gitterlinsen können dabei bevorzugt mittels 2-Photonenlithografie additiv hergestellt werden.

Die achromatisierenden Komponenten bzw. Mittel können in ihrer diffraktiven Struktur auch einen sphärischen Anteil aufweisen. Dies kann auch durch eine Gitter-Linse realisiert sein. So kann auch die Foki-Bildung von Foki unterschiedlicher Wellenzahlen k* in unterschiedlicher Tiefe auf einem kleineren Raum in der Tiefe erfolgen. Damit kann zumindest teilweise eine linienhafte Fokussierung von unelastisch gestreuter Raman-Strahlung zumindest in einem verkleinerten geometrischen Teilbereich im Detektionsstrahlengang erfolgen. Diesem geometrischen Teilbereich ist eine Spaltblende zur konfokalen Diskriminierung zugeordnet.

Die Komponenten bzw. Mittel zur Achromatisierung bei der Detektion, wie eine Gitterlinse, können sowohl dem Beleuchtungs- als auch dem Detektionsstrahlengang zugeordnet sein. Dies dient dazu, die unelastisch gestreute Raman-Strahlung verschiedener Raman-Anregungs-Wellenzahlen k*_A auf einem möglichst kurzen Lichtspalt zu fokussieren. So ist vorzugsweise eine kleine dezentrierte Fresnel-Phasen-Hologramm-Linse bereits auf der Eingangsfläche einer GRIN-Linse bevorzugt mittels 2-Photonenlithografie aufgebracht, die zur zumindest teilweisen Kollimierung des aus einer Singlemode-Faser austretenden Raman-Anregungs-Lichts dient.

Es handelt sich bei der Erfindung ferner um eine Anordnung zur Raman-Spektroskopie nach Anspruch 5 mit mindestens einer Anregungsquelle elektromagnetischer Strahlung für die Raman-Spektroskopie und mit mindestens einer Fokussier-Optik, wobei diese sowohl zur Erzeugung fokussierter Anregungsstrahlung zwecks Beleuchtung des Objektraumes mit Raman-Anregungsstrahlung als auch zur Erfassung der unelastisch gestreuten Raman-Strahlung aus dem Objektraum ausgebildet ist.

Erfindungsgemäß ist bzw. sind in der Fokussier-Optik eine erste Einrichtung zur chromatischen Tiefenaufspaltung von Foki oder von Foki oder fokussierten Bereichen (chromatisch in der Tiefe Foki-aufspaltende Einrichtung) bzw. chromatisch in der Tiefe Foki-aufspaltende Mittel angeordnet oder diese Einrichtung bzw. diese Mittel sind der Fokussier-Optik zugeordnet, die entweder in Transmission, in Reflexion oder in Kombination von Transmission und Reflexion arbeiten. Es ist auch möglich, dass die chromatisch in der Tiefe Foki-aufspaltenden Einrichtung bzw. die Mittel Bestandteil einer der Fokussier-Optik vorgeordneten Kollimatoroptik oder dieser zugeordnet ist bzw. sind.

Darüber hinaus können sowohl eine Kollimator- als auch eine Fokussier-Optik mit chromatisch in der Tiefe Foki-aufspaltenden Elementen bzw. Mitteln, also selbst chromatisch ausgebildet sein. Bei der Abbildung von der Raman-Anregungslichtquelle zur fokussierten Beleuchtung im Objektraum sind längs des optischen Pfades chromatisch in der Tiefe Foki-aufspaltende Elemente bzw. Mittel angeordnet. Für die Miniaturisierung der Anordnung sind in der Regel transmissive chromatische Elemente bzw. Mittel zur Tiefenaufspaltung von Foki sehr geeignet.

Des Weiteren sind in der Anordnung zur Raman-Spektroskopie, vorzugsweise in der Fokussier-Optik, chromatisch sowohl in der Tiefe als auch in Querrichtung Foki-aufspaltende Komponenten bzw. Mittel angeordnet. Diese Komponenten bzw. Mittel stellen eine Basis für die Trennung der unelastisch gestreuten Raman-Strahlung von der Raman-Anregungsstrahlung dar. Dadurch können die Foki unterschiedlicher Raman-Anregungswellenlängen zumindest näherungsweise auf einem linienhaften Bereich nicht nur mit einer Tiefen- sondern auch mit einer Querkomponente angeordnet sein.

Des Weiteren sind in der Anordnung zur Raman-Spektroskopie die Foki-aufspaltenden Mittel vorzugsweise entweder mit mindestens einem diffraktiv-optischen Element oder mit mindestens einer hyperchromatisch refraktiven Komponente ausgebildet.

Mindestens eine hyperchromatisch refraktive Komponente kann in der Fokussieroptik auch mit Querversatz, also dezentriert ausgebildet sein, um auch eine signifikante laterale Aufspaltung von Foki im Objektraum zu erzeugen. Diese entspricht einer erheblichen chromatischen Queraberration, auch als "lateral color" bekannt. Es ist aber auch möglich, in der Fokussieroptik einen Prismenkeil anzuordnen, welche denselben Effekt erzielt, jedoch eine zusätzliche optische Komponente bedeutet. Für das Raman-Streulicht führt dies zu einer lateralen Entkopplung, also geometrischen Separierung vom Raman-Anregungslicht im Strahlengang. So kann die Detektion von Raman-Streulicht ermöglicht werden.

Es ist auch möglich, dass die Foki-aufspaltenden Elemente bzw. Mittel als Kombination von mindestens einem diffraktiv-optischen Element und mindestens einer brechkraftkompensierenden refraktiven Komponente ausgebildet sind. Auch diese brechkraftkompensierende refraktive Komponente kann hyperchromatisch ausgebildet sein.

Dabei kann bei der Anordnung zur Raman-Spektroskopie das diffraktiv-optische Element im Strahlengang sowohl für Raman-anregende Strahlung als auch für unelastisch gestreute Raman-Strahlung als wesentlich - in Bezug auf die Apertur-Ausdehnung - dezentrierte Fresnel-Linse ausgebildet sein. Die Dezentrierung beträgt mindestens 10% der maximalen Ausdehnung der Aperturfläche in der Ebene, in welcher die Dezentrierung besteht. Die (signifikant) dezentrierte Fresnel-Linse wird bevorzugt in Transmission benutzt.

Bevorzugt beträgt die Dezentrierung der Fresnel-Linse jedoch mindestens den halben Durchmesser ihrer Aperturfläche oder der halben maximalen Ausdehnung der Aperturfläche. Vorzugsweise ist die Fresnel-Linse in Form eines Phasen-Hologramms ausgebildet, um eine hohe Beugungseffizienz in der ersten Beugungsordnung zu haben. Aufgrund der Raman-Verschiebung ergibt sich mittels wesentlich dezentrierter Fresnel-Linse für die unelastisch gestreute Raman-Strahlung eine andere chromatische Quer-Aberration als für die Raman-anregende Strahlung. Dadurch ist eine geometrische Entkopplung der unelastisch gestreuten Raman-Strahlung für die Detektion technisch gut möglich. Die dezentrierte Fresnel-Linse kann hierbei als lichtsammelnde oder auch als lichtstreuende Optik ausgeführt sein.

Bevorzugt ist bei der Anordnung zur Raman-Spektroskopie die signifikant dezentrierte Fresnel-Linse mit ihrem Punkt der Liniendichte null, was den Durchstoßpunkt der optischen Achse der Fresnel-Linse darstellt, stets sowohl außerhalb des genutzten Strahlvolumens der Raman-anregenden als auch außerhalb des genutzten Strahlvolumens der unelastisch gestreuten Raman-Strahlung angeordnet. Somit liegt der Ort der lokalen Brechkraft null, welcher das optische Zentrum der Fresnel-Linse darstellt, vorzugsweise außerhalb der optisch genutzten Aperturfläche der Sonde, was eine sehr starke Dezentrierung darstellt. In diesem Fall gibt es für Licht am genutzten Ausschnitt der Fresnel-Linse stets auch eine Ablenkung durch Lichtbeugung. Dies dient der möglichst vollständigen Trennung von Raman-Anregungslicht und von zurückkommendem Raman-Streulicht bereits in der Sonde.

Weiterhin kann der signifikant dezentrierten Fresnel-Linse in der Anordnung zur Raman-Spektroskopie mindestens eine Linse oder eine refraktiv wirkende Linsenfläche mit zur Fresnel-Linse entgegen gesetzter Brechkraft zugeordnet sein. Dabei kann die Fresnel-Linse eine positive oder eine negative Brechkraft aufweisen. Die Fresnel-Linse ist dabei vorzugsweise als Phasen-Gitter ausgebildet und stellt somit eine Phasen-Fresnel-Linse dar.

Die positive oder negative Brechkraft der Linse oder der refraktiv wirkenden Linsenfläche dient zur zumindest teilweisen Brechkraftkompensation der Fresnel-Linse. Vorzugsweise kann die Brechkraft-Kompensation für eine Anregungswellenlänge auch vollständig sein. Dann wirkt die Kombination aus Phasen-Fresnel-Linse und refraktive Linse oder refraktiv wirkende Linsenfläche für diese Wellenlänge zumindest näherungsweise wie eine planparallele Platte. Vorzugsweise sind die Phasen-Fresnel-Linse und die kompensierende refraktive Linse oder refraktiv wirkende Linsenfläche beide zumindest näherungsweise zentriert zueinander.

Vorzugsweise sind also eine Phasen-Fresnel-Linse und eine refraktiv wirkende Linse oder Linsenfläche mit jeweils entgegengesetzter Brechkraft einander zugeordnet, also kombiniert. Jede der beiden Linsen - Phasen-Fresnel-Linse oder refraktive Linse oder Linsenfläche - kann dabei entweder eine positive Brechkraft aufweisen, also lichtsammelnd sein, oder eine negative Brechkraft aufweisen, also lichtzerstreuend sein.

Mit Vorteil kann bei der Anordnung zur Raman-Spektroskopie die zur Brechkraftkompensation der Phasen-Fresnel-Linse refraktiv wirkende Linse oder Linsenfläche mindestens um den halben Durchmesser ihrer Aperturfläche dezentriert sein.

Damit befindet sich der Scheitel der refraktiv wirkenden Linse oder Linsenfläche, welche bevorzugt achssenkrecht angeordnet ist, sowohl außerhalb des genutzten Strahlvolumens der Raman-anregenden Strahlung als auch der unelastisch gestreuten Raman-Strahlung. Vorzugsweise kann für eine Wellenzahl im Anregungsspektrum für die Kombination von Fresnel-Linse und Linse oder refraktiv wirkender Linsenfläche eine zumindest näherungsweise vollständige Kompensation der Brechkraft bestehen.

Der Punkt der Liniendichte null der signifikant dezentrierten Fresnel-Linse und der Scheitelpunkt der refraktiv wirkenden Linsenfläche zur Brechkraftkompensation können zumindest näherungsweise auf einer Geraden angeordnet sein, die sich außerhalb des genutzten Strahlvolumens befindet. Diese Gerade ist bevorzugt parallel zur Längsachse der Sonde angeordnet.

Weiterhin ist bei der Anordnung zur Raman-Spektroskopie vorzugsweise eine Doppel-Mantel-Faser angeordnet. Dabei ist der Kern als Singlemode-Wellenleiter-Bereich und der innere Mantel der Doppel-Mantel-Faser ist als Multimode-Wellenleiter-Bereich ausgebildet. Die Beleuchtung erfolgt mit dem Singlemode-Kern der Doppel-Mantel-Faser und die Detektion über den inneren Mantel der Doppel-Mantel-Faser im Multimode-Wellenleiter-Betrieb.

Von Vorteil für die Minimierung der Anordnung zur Raman-Spektroskopie ist, wenn vorzugsweise der Singlemode Faser-Kern der Doppel-Mantel-Faser mindestens um den Radius des Singlemode-Faser-Kerns exzentrisch versetzt in der Doppel-Mantel-Faser angeordnet ist. Dabei kann auf einer Begrenzungsfläche von Luft zu refraktivem Material, die der inneren Mantelfläche einer Doppelmantelfaser unmittelbar gegenüberliegt, auch eine Gitter-Linse zur Anpassung der Tiefenposition der Foki verschiedener Wellenzahlen k* ausgebildet sein. Vorzugsweise ist diese Gitter-Linse an der Endfläche einer GRIN-Linse ausgebildet. Hierzu wird zur Herstellung der Gitter-Linse bevorzugt die 2-Photonenlithografie eingesetzt.

Vorzugsweise ist diese Gitter-Linse in Konkavform ausgebildet, insbesondere dann, wenn das dezentrierte Fresnel-Phasen-Hologramm eine positive Brechkraft besitzt. Es wird bei der Gitter-Linse bevorzugt jeweils die erste Beugungsordnung genutzt. So kann durch Wellenfrontformung die jeweilige Tiefenposition der Foki verschiedener Wellenzahlen k* (k*=1/lambda) beeinflusst werden, so dass die Tiefenposition des abstrahlenden Endes der Singlemode-Faser und der Tiefenposition der inneren Mantelfläche der Doppelmantelfaser zur Detektion von Raman-Streulicht in der Tiefe angenähert werden. Das bringt konstruktive Vorteile bei der Ausbildung und Herstellung der Mikrooptik und kann die Lichteffizienz der Anordnung deutlich erhöhen.

Es ist jedoch auch möglich, dass bei einer Anordnung zur Raman-Spektroskopie mindestens eine Singlemode-Wellenleiter-Faser mit Kern als Singlemode-Wellenleiter-Bereich und eine separate Multimode-Wellenleiter-Faser mit Kern als Multimode-Wellenleiter-Bereich in geometrischer Parallel-Anordnung angeordnet sind. Es können jedoch auch mehrere Singlemode-Wellenleiter-Fasern angeordnet sein, die lateral und in der Tiefe beabstandet sind und jeweils das Raman-Anregungs-Licht am Faserende in verschiedenen Tiefen abstrahlen. Dabei sind der Abstand und die Lage neben dem Multimode-Wellenleiter so gewählt, dass das fokussierte Raman-Streulicht zumindest näherungsweise in eine gemeinsame Mikro-Spaltblende trifft. Diese ist vorzugsweise auf dem Kern des Multimode-Wellenleiters angeordnet.

Von Vorteil für eine Anordnung zur Raman-Spektroskopie ist, wenn der Kern des Single-mode-Wellenleiters allein zur Bestrahlung des Objektraums mit Raman-Anregungsstrahlung und der Multimode-Wellenleiter zur Erfassung von unelastisch gestreuter Raman-Strahlung aus dem Objektraum ausgebildet sind.

Es ist jedoch auch möglich, eine spezielle Doppel-Mantel-Faser einzusetzen, die vorzugsweise zwei Singlemode-Kerne besitzt und diese beiden Singlemode-Kerne mit einem gemeinsamen inneren Mantel umschließt und der inneren Mantel von einem äußeren Mantel umschlossen wird. So besteht eine Doppel-Mantel-Faser mit zwei Singlemode-Kemen im inneren Mantel. Die beiden Singlemode-Kerne mit nachgeordneter Fokussieroptik mit chromatischen Mitteln zur Tiefen- und Quer-Separierung von Foki dienen zur Bestrahlung des Objekts. Dabei sind die abstrahlenden Enden der beiden Singlemode-Kerne bevorzugt sowohl lateral als auch in der Tiefe versetzt, so dass sich monochromatisches Licht von dem einen Singlemode-Kern mit dem Licht des anderen Singlemode-Kerns zumindest näherungsweise in einem Fokus im Objektraum zusammenfällt. So kann der Fokus eines Pump-Strahls und der Fokus eines Stokes-Strahls zur Koinzidenz gebracht werden. Dies kann für die Coherent anti-Stokes Raman scattering spectroscopy (CARS) genutzt werden. Zumindest für einen kleinen Wellenzahlbereich bleiben die beiden Foki beim Durchstimmen zumindest näherungsweise in Koinzidenz. Die Detektion erfolgt über den inneren Mantel der Doppel-Mantel-Faser wie auch bereits in der Schrift US 8203708 B2 beschrieben.

Bei der Anordnung zur Raman-Spektroskopie kann mindestens eine zumindest näherungsweise spaltförmige Blende bzw. Abschattblende auf der Endfläche des Multimode-Wellenleiter-Bereichs angeordnet sein. Diese zumindest näherungsweise spaltförmige Blende bzw. Abschattblende dient zur zumindest teilweisen konfokalen Diskriminierung.

Bevorzugt kann bei der Anordnung zur Raman-Spektroskopie die an die Endfläche des Multimode-Wellenleiter-Bereichs angrenzende Tangentialfläche in einem Winkel, bevorzugt in einem spitzen Winkel, zur Achse des Single-Mode-Faser-Kerns angeordnet sein.

Dabei kann bei der Anordnung zur Raman-Spektroskopie die Endfläche des Multimode-Wellenleiter-Bereichs auch in Form eines Gitter-Prismas ausgebildet sein, was auch als "grism" bezeichnet wird. Das Gitter-Prisma ist lichtbeugend und ist so dimensioniert, dass es für eine Wellenzahl k* (k*=1/lambda) vorzugsweise in der ersten Beugungsordnung im Geradeaus-Modus arbeitet.

Dabei ist es vorteilhaft, wenn vorzugsweise bei der Anordnung zur Raman-Spektroskopie mindestens eine spaltförmige Mikro-Abschattblende auf dem Gitter-Prisma angeordnet ist. Diese Mikro-Abschattblende kann eine Spaltblende oder auch eine Spaltblenden-Anordnung in Schichtenform darstellen. Abgeschattet sind bevorzugt die Gitterflächen, die zumindest näherungsweise senkrecht zu den Strahlen des Raman-Streulichts ausgebildet sind. Die bevorzugten Abmessungen der Mikro-Abschattblende betragen näherungsweise um 5 bis 20 Wellenlängen, bevorzugt um 10 Wellenlängen der mittleren Wellenlänge des Spektrums Raman-Streulichts.

Des Weiteren ist es auch möglich, dass bei der Anordnung zur Raman-Spektroskopie die Endfläche des Multi-mode-Wellenleiter-Bereichs mit gekrümmter Oberfläche ausgebildet ist. Vorzugsweise kann auf der gekrümmten Oberfläche eine Spaltblende ausgebildet sein. Auch hierbei erfolgt die Herstellung der gekrümmten Oberfläche des Multimode-Wellenleiter-Bereichs bevorzugt mittels 2-Photonenlithografie.

Darüber hinaus kann bei der Anordnung zur Raman-Spektroskopie das Frontobjektiv einer Sonde in Bezug auf seine Apertur-Ausdehnung wesentlich dezentriert angeordnet sein. Diese Dezentrierung entspricht vorzugsweise mindestens dem halben Apertur-Durchmesser im Fall einer zumindest näherungsweisen kreisförmigen Apertur. Vorzugsweise handelt es sich dabei um ein diffraktiv ausgebildetes Frontobjektiv der Sonde.

Es ist von Vorteil, wenn bei der Anordnung zur Raman-Spektroskopie das Spektrometer zur Erfassung der Raman-gestreuten Strahlung vorzugsweise als Fourier-Transformations-Spektrometer ausgebildet ist. Vorteilhafterweise weist ein Fourier-Transformations-Spektrometer keine Spaltblende auf und besitzt somit einen signifikanten Lichtleitwertvorteil gegenüber einem dispersiven Spektrometer.

Außerdem wird bevorzugt eine Notch-Abschwächungsfilterung der unelastisch gestreuten Raman-Strahlung zur Unterdrückung des Raman-Anregungslichts durchgeführt. Dazu sind vorzugsweise mindestens ein Notch-Abschwächungsfilter oder ein Notch-Abschwächungsfilter-System für die Abschwächung elektromagnetischer Strahlung der eingesetzten Raman-Anregungswellenlängen im Detektionsstrahlengang in Lichtrichtung vor dem Spektrometer angeordnet. Vorzugsweise ist beim sequenziellen Einschalten von mehreren Raman-Anregungslichtquellen das Notch-Filtersystem mit seiner Notch-Wellenlänge vorbestimmt gesteuert an die jeweilige aktuelle Wellenlänge der Raman-Anregungs-Quelle angepasst. Dies kann beispielsweise durch gesteuertes Kippen eines Notch-Abschwächungsfilters in einer Kippvorrichtung erreicht werden. Alternativ kann das Notch-Abschwächungsfilter-System mit einem ansteuerbaren Filterrotator oder einer ansteuerbaren Filter-Schiebevorrichtung versehen sein.

Des Weiteren können in Lichtrichtung nacheinander mehrere Notch-Abschwächungsfilter mit fester Notch-Wellenlänge, jeweils passend zu einer festen Anregungswellenlänge, angeordnet sein. Diese Filter bilden dann vorzugsweise einen Stapel. Mit Vorteil kann auch Notch-Abschwächungsfilter mit mehreren Notch-Wellenlängen, beispielsweise mit drei oder vier auf die Raman-Anregungslichtquelle abgestimmten Notch-Wellenlängen zur Anwendung kommen.

Des Weiteren kann ein Notch-Abschwächungsfilter auch als vorbestimmt steuerbarer Wellenlängen-durchstimmbarer Filter mit vorbestimmt steuerbarer Auslöschungswellenlänge auf der Basis von elektrooptischen Modulatoren, beispielsweise Flüssigkristalle, ausgebildet sein. Dabei kann es von Vorteil sein, wenn vorzugsweise Steuermittel zur Synchronisierung des Wellenlängen-durchstimmbaren Notch-Abschwächungsfilters mit der Raman-Anregungslichtquelle hinsichtlich der aktuell verwendeten Wellenlänge angeordnet sind. So können beim Wellenlängen-Durchstimmen für das Objekt auch "ungeeignete" Raman-Anregungswellenlängen ausgelassen werden, die beispielsweise bei Bio-Molekülen besonders unerwünschte Artefakte erzeugen.

Weiterhin ist es möglich, dass vorzugsweise ein Frequenzkamm-Laser mit einem vergleichsweise groben Frequenz-Kamm eingesetzt wird, der somit gleichzeitig mehrere Anregungs-Foki mit Tiefenkomponente erzeugt. Diese Foki sind - je nach Stärke der chromatischen Aufspaltung - voneinander separiert. Vorzugsweise sind diese Foki mindestens um den wellenoptischen Schärfentiefebereich voneinander separiert, der hier mit der Anregungswellenlänge dividiert durch das Quadrat der numerischen Apertur der jeweiligen Anregungsstrahlung definiert ist.

Des Weiteren kann der Singlemode-Faser am distalen Ende - also in der Raman-Sonde - ein Bandpassfilter nur für die Raman-Anregungs-Wellenzahlen zugeordnet sein. Somit kann das Anregungslicht auch verschiedener Wellenzahlen in die Raman-Sonde eintreten. Dagegen wird Raman-Streulicht, welches in der speisenden Singlemode-Faser entstanden ist, geblockt.

Dem inneren Mantel der Doppelmantelfaser kann ein Notch-Abschwächungsfilter für die Raman-Anregungs-Wellenzahlen zugeordnet sein, welches die Raman-Anregungsstrahlung im unerwünschten Rücklauf oder durch unerwünschte Reflexionen im Strahlengang soweit abschwächt, dass eine Raman-Anregung im Mantel der Faser für die Detektion weitgehend zu vernachlässigen ist.

Nachfolgend werden bevorzugte Ausführungsformen der vorliegenden Erfindung anhand begleitender Figuren beispielhaft beschrieben. Einzelelemente der beschriebenen Ausführungsformen sind nicht auf die jeweilige Ausführungsform beschränkt. Vielmehr können Elemente der Ausführungsformen beliebig miteinander kombiniert werden und neue Ausführungsformen dadurch erstellt werden. Es zeigt:
- **Figur 1**: eine schematische Darstellung einer Anordnung zur Raman-spektroskopischen Messung gemäß einem ersten Beispiel;
- **Figur 2**: beispielhafte Raman-Spektren;
- **Figur 3**: eine schematische Darstellung einer Anordnung zur Raman-spektroskopischen Messung gemäß einem zweiten Beispiel;
- **Figur 4**: eine schematische Darstellung einer Anordnung zur Raman-spektroskopischen Messung gemäß einem dritten Beispiel;
- **Figur 5**: eine schematische Darstellung einer Anordnung zur Raman-spektroskopischen Messung gemäß einem vierten Beispiel;
- **Figur 6**: eine schematische Darstellung einer Anordnung zur Raman-spektroskopischen Messung gemäß einem fünften Beispiel;
- **Figur 7**: einen beispielhaften Linsenkörper mit einer dezentrierter Fresnel-Linse;
- **Figur 8**: eine schematische Darstellung einer Anordnung zur Raman-spektroskopischen Messung gemäß einem sechsten Beispiel;
- **Figur 9**: eine schematische Darstellung einer Anordnung zur Raman-spektroskopischen Messung gemäß einem siebten Beispiel; und
- **Figur 10**: eine beispielhafte Messung an mehreren Messorten im Objektraum.

**Bezugszeichenliste mit Erläuterungen**

| **Bezugszeichen** | **Bezeichnung** |
|---|---|
| 1 | Raman-Anregungslichtquellen-System mit drei seriell schaltbaren Lichtquellen mit drei Schwerpunktwellenlängen lambda_1, lambda_2 und lambda_3 |
| 1.1 | Raman-Anregungslichtquelle 1 mit Schwerpunktwellenlänge lambda_1, welche hier die kürzeste Wellenlänge bei der Raman-Anregung darstellt |
| 1.2 | Raman-Anregungslichtquelle 2 mit Schwerpunktwellenlänge lambda_2, welche hier eine mittlere Wellenlänge bei der Raman-Anregung darstellt |
| 1.3 | Raman-Anregungslichtquelle 3 mit Schwerpunktwellenlänge lambda_3, welche hier die längste Wellenlänge bei der Raman-Anregung darstellt |
| 2 | Singlemode-Faser |
| 3 | Doppelmantel-Faser mit Singlemode-Faserkern 4 und innerem Mantelbereich 5 als Multimode-Wellenleiter |
| 4 | Singlemode-Faserkern der Doppelmantel-Faser |
| 5 | Multimode-Innen-Mantelbereich |
| 6 | Außen-Mantel der Doppelmantel-Faser |
| 7 | Gehäuse der Raman-Sonde |
| 8 | chromatisches Mikro-Objektiv, bestehend aus einer eher achromatischen GRIN-Linse 9 zur Kollimation und Fokussierung sowie einer zentrierten Phasen-Negativ-Fresnel-Linse 10, ausgebildet als diffraktiv-optisches Element (DOE) zur chromatischen Tiefenaufspaltung von Foki |
| 8.1 | chromatisches Mikro-Objektiv mit den Komponenten refraktive Sammellinse 52 mit konvexer Linsenfläche 53 und stark dezentrierter ebener Phasen-Negativ-Fresnel-Linse 54 sowie der refraktiven Frontlinse 21 |
| 8.2 | chromatisches Mikro-Objektiv, bestehend aus den Komponenten Linsenkörper 55 mit refraktiver Zerstreuungs-Linsenfläche 56 und stark dezentrierter ebener Phasen-Positiv-Fresnel-Linse 57 sowie der refraktiven Frontlinse 21 |
| 8.3 | chromatisches Mikro-Objektiv, bestehend aus der GRIN-Linse 9.2 und der Phasen-Positiv-Fresnel-Linse 60 |
| 8.4 | chromatisches Mikro-Objektiv, bestehend aus dem Umlenkprisma im Frontbereich 23 und der dezentrierten ebenen Phasen-Positiv-Fresnel-Linse 61 |
| 9 | GRIN-Linse zur Kollimierung von Raman-Anregungs-Licht RAL und Fokussierung von Raman-Streulicht RSL |
| 9.1 | GRIN-Linse zur Kollimierung von Raman-Anregungs-Licht RAL mit dezentrierter Negativ-Linsenfläche 59 und Fokussierung von Raman-Streulicht RSL |
| 9.2 | zentrierte GRIN-Linse zur Fokussierung |
| 10 | zentrierte Phasen-Negativ-Fresnel-Linse, ausgebildet als diffraktiv-optisches Element (DOE) (als ein Beispiel für Mittel zur chromatischen Tiefenaufspaltung bzw. für eine Einrichtung zur chromatischen Tiefenaufspaltung) |
| 11 | Objektraum |
| 12 | Schicht 1 im Objektraum 11 |
| 13 | Schicht 2 im Objektraum 11 |
| 14 | Schicht 3 im Objektraum 11 |
| 15 | Kollimator für Raman-gestreutes Licht RSL |
| 16 | Notch-Filter-System zum Sperren von noch verbliebenem Raman-Anregungslicht RAL |
| 17 | Umlenkspiegel |
| 18 | Fourier-Spektrometer |
| 19 | Kollimator-Linse für Raman-Anregungslicht RAL und zur Fokussierung von Raman-Streulicht RSL |
| 20 | Raman-Sonde |
| 21 | Zumindest näherungsweise zentrierte refraktive Frontlinse zur Fokussierung von Raman-Anregungslicht RAL |
| 22 | Spiegelfläche an der Frontlinse 22 |
| 23 | Umlenkprisma im Frontbereich |
| 30 | Bandpass-Filter transmittiert nur Raman-Anregungslicht RAL |
| 31 | Mikro-Bandsperrfilter, sperrt nur Raman-Anregungslicht RAL |
| 32 | Makro-Bandsperrfilter, sperrt nur Raman-Anregungslicht RAL |
| 41 | geschwärzter Auftreffbereich für die Strahlung 0. Ordnung So wird ein unerwünschter Fokusfleck in der 0. Ordnung weitgehend absorbiert. |
| 43 | Treppenstufenstück als bevorzugt geometrisch-optisch wirkende Komponente |
| 44 | Kombination aus Abschattblende 46 und Mikro-Bandsperrfilter 31 auf dem Treppenstufenstück 43 |
| 45 | Gitter-Prisma (Grism) mit variabler Stufenhöhe und Gitterperiode d als treppenförmige und bevorzugt lichtbeugende Struktur Das Gitter-Prisma dient dazu, auch bei Raman-gestreutem Licht mit veränderlichen Wellenzahlen den Eintritt in den Multimode-Innen-Mantelbereich 5 mit geringem Abknicken der Strahlen durch Beugung zu ermöglichen. Dem Gitter-Prisma kann ein Mikro-Bandsperrfilter 31 vorgeordnet sein. |
| 45.1 | Bereich, wo die Stufenhöhe und Gitterperiode des Gitter-Prismas 45 feiner als im mittleren Bereich des Gitter-Prismas sind |
| 45.2 | Bereich, wo die Stufenhöhe und Gitterperiode des Gitter-Prismas 45 gröber als im mittleren Bereich des Gitter-Prismas sind |
| 46 | Spaltblende |
| 46.1 | Spalt der Spaltblende 46 |
| 47 | Spaltblenden-Anordnung in Schichtenform Diese Spaltblenden-Anordnung kann auch durch Drucktechnik erzeugt werden. |
| 47.1 | ein Spalt der Spaltblenden-Anordnung in Schichtenform 47 |
| 50 | stark dezentrierte refraktive Sammellinse |
| 51 | erste Fläche der stark dezentrierten refraktiven Sammellinse 50 |
| 52 | refraktive Sammellinse mit konvexer Linsenfläche 53 und stark dezentrierter ebener Phasen-Negativ-Fresnel-Linse 54 |
| 53 | konvexe Linsenfläche der refraktiven Sammellinse 52 |
| 54 | stark dezentrierte ebene Phasen-Negativ-Fresnel-Linse, ausgebildet als diffraktiv-optisches Element (DOE) (als ein Beispiel für Mittel zur chromatischen Tiefenaufspaltung bzw. für eine Einrichtung zur chromatischen Tiefenaufspaltung) |
| 55 | Linsenkörper mit refraktiver Zerstreuungs-Linsenfläche 56 und stark dezentrierter ebener Phasen-Positiv-Fresnel-Linse 57 |
| 56 | stark dezentrierte konkave Linsenfläche des Linsenkörpers 55 Die Linsenfläche 56 stellt eine Freiformfläche dar, die nur Sphären-ähnlich ist. |
| 57 | stark dezentrierte ebene Phasen-Positiv-Fresnel-Linse auf Linsenkörper 55, ausgebildet als diffraktiv-optisches Element (DOE) (als ein Beispiel für Mittel zur chromatischen Tiefenaufspaltung bzw. für eine Einrichtung zur chromatischen Tiefenaufspaltung) |
| 58 | Phasengitter auf Sammel-Linsenfläche |
| 59 | dezentrierte Negativ-Linsenfläche auf der Frontfläche einer GRIN-Linse 9.3 |
| 60 | dezentrierte ebene Phasen-Positiv-Fresnel-Linse auf Eingangsfläche einer GRIN-Linse 9.2, ausgebildet als diffraktiv-optisches Element (DOE) (als ein Beispiel für Mittel zur chromatischen Tiefenaufspaltung bzw. für eine Einrichtung zur chromatischen Tiefenaufspaltung) |
| 61 | dezentrierte ebene Phasen-Positiv-Fresnel-Linse auf der Frontfläche eines Umlenkprismas 22, ausgebildet als diffraktiv-optisches Element (DOE) (als ein Beispiel für Mittel zur chromatischen Tiefenaufspaltung bzw. für eine Einrichtung zur chromatischen Tiefenaufspaltung) |
| 70 | aus GRIN-Linse herausgearbeitetes Volumen |
| 71 | Zerstreuungs-Linsenfläche zur Auskopplung in den Innen-Mantelbereich 5 |
| 72 | Phasengitter auf Zerstreuungs-Linsenfläche |
| 73 | verlorene Strahlen |
| AS | Achse der Sonde 20 |
| b | kürzeste Wellenlänge des Raman-Anregungslichts RAL |
| DA | Durchmesser der genutzten Aperturfläche bei kreisförmiger Aperturfläche, sonst maximale Ausdehnung der genutzten Aperturfläche in der Ebene, in welcher eine Dezentrierung besteht |
| dec_FL | Dezentrierung der Phasen-Fresnel-Linse |
| dec_rL | Dezentrierung der refraktiven Linse oder Linsenfläche, welche die Brechkraft DF der Phasen- Fresnel-Linse zumindest näherungsweise für eine Wellenzahl kompensiert |
| delta_ax_o | chromatische Längs-Aufspaltung von Foki im Objektraum (chromatische Tiefenseparation von Foki) |
| delta_k* | Verschiebung eines spektralen Merkmals im Raman-Spektrum auf der absoluten Wellenzahl-Achse, wenn mit einer anderen Anregungswellenlänge gearbeitet wird. |
| delta_lat_o | Laterale chromatische Aufspaltung von Foki im Objektraum (chromatische Queraufspaltung von Foki im Objektraum) |
| delta_tc | Abkühlzeit für einen Messpunkt |
| delta_t_m_1_F1 | Messzeit 1 für das Fourier-Spektrometer im Raman-System an einem Messpunkt, hier am Fokus F1 |
| delta_t_m_2_F1 | Messzeit 2 für das Fourier-Spektrometer im Raman-System an einem Messpunkt, hier am Fokus F1 |
| F1 | Fokus der kürzesten Wellenlänge des Anregungslichtquellen-Systems 1 |
| F2 | Fokus einer mittleren Wellenlänge des Anregungslichtquellen-Systems 1 |
| F3 | Fokus der größten Wellenlänge des Anregungslichtquellen-Systems 1 |
| g | mittlere Wellenlänge des Raman-Anregungslichts RAL |
| g_F_d | Gerade auf der zumindest näherungsweise die Foki des Raman-Anregungslichts im Detektionsraum der verschiedenen AnregungsWellenlängen liegen. |
| g_F_o | Gerade auf der zumindest näherungsweise die Foki des Raman-Anregungslichts RAL im Objektraum der verschiedenen Wellenlängen liegen. |
| GIB | Gradienten-Index-Bereich einer GRIN-Linse |
| k*_A | Wellenzahl von Raman-Anregungslicht RAL k*=1/lambda, lambda = Wellenlänge |
| k*_s | Wellenzahl von Raman-Streulicht RSL k*=1/lambda, lambda = Wellenlänge |
| O_ds_0 | Ort der Liniendichte gleich null einer Phasen-Fresnel-Linse (stellt jeweils den Ort der optischen Achse der Phasen-Fresnel-Linsen 54, 57, 60 und auch 61 dar) |
| r | größte Wellenlänge des Raman-Anregungslichts RAL |
| RAL | Raman-Anregungslicht ist gleichbedeutend mit Raman-Anregungs-Strahlung |
| RAL_b | Raman-Anregungslicht der kürzesten Wellenlänge b |
| RAL_g | Raman-Anregungslicht einer mittleren Wellenlänge g |
| RAL_r | Raman-Anregungslicht der größten Wellenlänge r |
| RSL | Raman-Streulicht ist gleichbedeutend mit unelastisch gestreutem Raman-Licht oder auch unelastisch gestreuter Raman-Strahlung |
| RSL_r | Raman-Streulicht, angeregt von Raman-Anregungslicht RAL_r |
| RSL_b | Raman-Streulicht, angeregt von Raman-Anregungslicht RAL_b |
| RSL_ras | spektral aufgespaltenes Raman-Streulicht, angeregt von Raman-Anregungslicht RAL_b |
| RSL_bas | spektral aufgespaltenes Raman-Streulicht, angeregt von Raman-Anregungslicht RAL_b |
| S_rL | Scheitelpunkt der refraktiv wirkende Linse oder Linsenfläche |
| SymA | Symmetrie-Achse sowohl von stark dezentrierter konvexer Linsenfläche 53 als auch von stark dezentrierter ebener Phasen-Negativ-Fresnel-Linse 54 sowie von stark dezentrierter konkaver Linsenfläche 56 und auch von stark dezentrierter ebener Phasen-Positiv-Fresnel-Linse 57 |
| t1, t1, t3 | Start-Zeitpunkt, bei denen eine der Lichtquellen des Anregungslichtquellen-Systems eingeschaltet wird. |
| theta_acc | für das Messobjekt noch akzeptable Temperatur |

### Beschreibung der Figuren

Die Erfindung wird beispielhaft anhand der Figuren 1 bis 10 beschrieben.

Hier wird der Begriff Licht stets als Synonym für elektromagnetische Strahlung vom Infrarotbis zum EUV-Spektrum verwendet. Somit sind im Weiteren Raman-Anregungslicht und Raman-Anregungsstrahlung in der Bedeutung gleich. In den Figuren 1 bis 9 sind die Beispiele für die Stokes-Strahlung dargestellt und die Anordnungen bezüglich der auftretenden Rotverschiebung ausgelegt.
Ein erstes Aspekt betrifft eine Anordnung zur Raman-Spektroskopie mit einem AnregungsLichtquellen-System, welches Raman-Anregungslicht gleichzeitig oder seriell mit unterschiedlichen diskreten Wellenlängen einschaltet oder in der Wellenlänge durchgestimmt. Somit kommt Licht mit verschiedenen Wellenlängen bei der Raman-Anregung zur Anwendung. Die Fokussier-Optik der Anordnung ist für diese Anregungswellenlängen mit chromatischen Mitteln ausgebildet oder diese sind derselben zugeordnet, so dass sich einerseits ein Anregungsfokus beim Wellenlängen-Durchstimmen vorbestimmt in der Tiefe des Objektraums verschiebt. Andererseits entstehen beim gleichzeitigen oder seriellen Einschalten von Raman-Anregungslicht verschiedener Wellenlängen mehrere separierte Anregungs-Foki in der Tiefe des Objektraums. Beim Objektraum kann es sich zum Beispiel um das Innere einer Aorta oder einer Schlagader handeln. Das im Objektraum in unterschiedlichen Tiefen Raman-gestreute Licht wird im Rücklauf separiert und der spektroskopischen Detektion zugeführt.

Die Figur 1 stellt eine beispielhafte Anordnung zur Raman-spektroskopischen Messung mit einem Raman-Anregungslichtquellen-System 1 mit drei seriell schaltbaren Raman-Anregungslichtquellen 1.1, 1.2 und 1.3 dar. Jede der drei Raman-Anregungslichtquellen emittiert Raman-Anregungslicht RAL mit einer von drei Wellenlängen r, g oder b, wobei r die größte und b die kleinste Wellenlänge darstellt. Dabei werden die einzelnen Lichtquellen 1.1, 1.2 oder 1.3 nacheinander eingeschaltet. Diese Anordnung wird für Untersuchungen eingesetzt, bei denen Objekte mit Schichtenstruktur untersucht werden sollen. Das in die Singlemode-Faser 2 eingekoppelte Raman-Anregungslicht RAL gelangt in den Singlemode-Faserkern 4 einer Doppelmantel-Faser 3 mit einem Multimode-Innen-Mantelbereich 5 und einem Außen-Mantel 6. Diese Doppelmantel-Faser 3 kann beim Einsatz auch vergleichsweise stark gekrümmt sein und ist mit einer Sonde verbunden. Das am Ende der Doppelmantel-Faser 3 aus dem Singlemode-Faserkern 4 austretende Licht gelangt in ein chromatisches Mikro-Objektiv 8, welches aus einer GRIN-Linse 9 und einer zentrierten Phasen-Negativ-Fresnel-Linse 10 besteht. Dies ist eine Fresnel-Linse in Form eines Phasen-Gitters mit Lichtzerstreuungs-Wirkung, siehe auch Detail 1. Dabei weist auch die GRIN-Linse 9 eine nicht ganz zu vernachlässigende Chromasie auf. Das chromatische Mikro-Objektiv 8 fokussiert bei rotverschobenem Licht schwächer und bei blauverschobenem Licht stärker. So liegt hier ein blauer Fokus dichter an der zentrierten Phasen-Negativ-Fresnel-Linse 10, dessen Lage auch durch die Chromasie der GRIN-Linse 9 etwas beeinflusst wird. Je nach Schwerpunktwellenlänge bildet sich beim Einschalten der einzelnen Lichtquellen je ein Fokus F1, F2 oder F3 im Objektraum 11 aus. Dabei trifft hier jeder Fokus F1, F2 oder F3 eine Schicht 12, 13, oder 14. Bei dieser Anordnung entsteht im Objektraum kein Fokusfleck durch Beugung an der zentrierten Phasen-Negativ-Fresnel-Linse 10 in der 0. Ordnung, was als Vorteil angesehen wird, da so jeweils beim Einschalten einer Lichtquelle nur jeweils genau ein Anregungsfokus F1, F2 oder F3 besteht. Das unelastisch gestreute und dabei rot-verschobene Raman-Streulicht RSL, jeweils aus einem Fokus von Raman-Anregungslicht RAL stammend, trifft auf die zentrierte Phasen-Negativ-Fresnel-Linse 10 und die GRIN-Linse 9, welches bei dem rotverschobenem Raman-Streulicht stärker zerstreuend wirkt als bei dem kürzerwelligen Raman-Anregungslicht, so dass der Singlemode-Faserkern 4 vom Raman-Streulicht RSL im Wesentlichen nicht getroffen wird, sondern das Raman-Streulicht RSL in den Innen-Mantelbereich 5 gelangt. Das am proximalen Ende der Doppelmantel-Faser 3 aus dem Multimode-Innen-Mantelbereich 5 austretende Licht wird von einem Kollimator 15 erfasst. Das kollimierte Licht gelangt über ein Notch-Filter-System 16, welches das noch im Strahlenbündel verbliebene Raman-Anregungslicht RAL der drei Wellenlängen r, g und b jeweils blockiert, über den Umlenkspiegel 17 in ein Fourier-Spektrometer 18. Mit dem Fourier-Spektrometer 17 werden die Raman-Spektren des Raman-Streulichts RSL bestimmt, die je nach Anregungswellenlänge aus einer anderen Tiefe stammen. Absolut sind die Raman-Spektren auf der Wellenzahl-Achse (k*-Achse) verschoben. So ist es auch möglich, wenn nur vergleichsweise schmalbandige spektrale Features vorhanden und von Interesse sind, diese gleichzeitig aufzunehmen, indem mittels Raman-Anregungslichtquellen-System 1 die drei Lichtquellen 1.1, 1.2 und 1.3 gleichzeitig eingeschaltet sind. Das Detail 1 stellt die Verhältnisse etwas präziser dar. Die Bezeichnungen r steht symbolisch für längerwelliges und die Bezeichnung b für kürzerwelliges Raman-Anregungslicht RAL. Das Raman-Streulicht RSL ist je nach Messobjekt mehr oder weniger spektral breitbandig.

Figur 2 stellt Raman-Spektren dar, die mit dem Fourier-Transform-Spektrometer 18 bestimmt wurden. Auf der Abszisse wird die Wellenzahl k* und auf der Ordinate die Intensität des detektierten Raman-Lichts I_Raman aufgetragen. Es werden zeitserielle Aufnahmen dargestellt, die zu den Start-Zeitpunkten t1, t2 oder t3 mit Raman-Anregungslicht der Schwerpunktwellenlängen lambda_1, lambda_2 oder lambda_3 gestartet wurden. Aus Gründen der Anschaulichkeit ist hier nur jeweils ein dominantes spektrales Merkmal im Raman-Spektrum dargestellt.

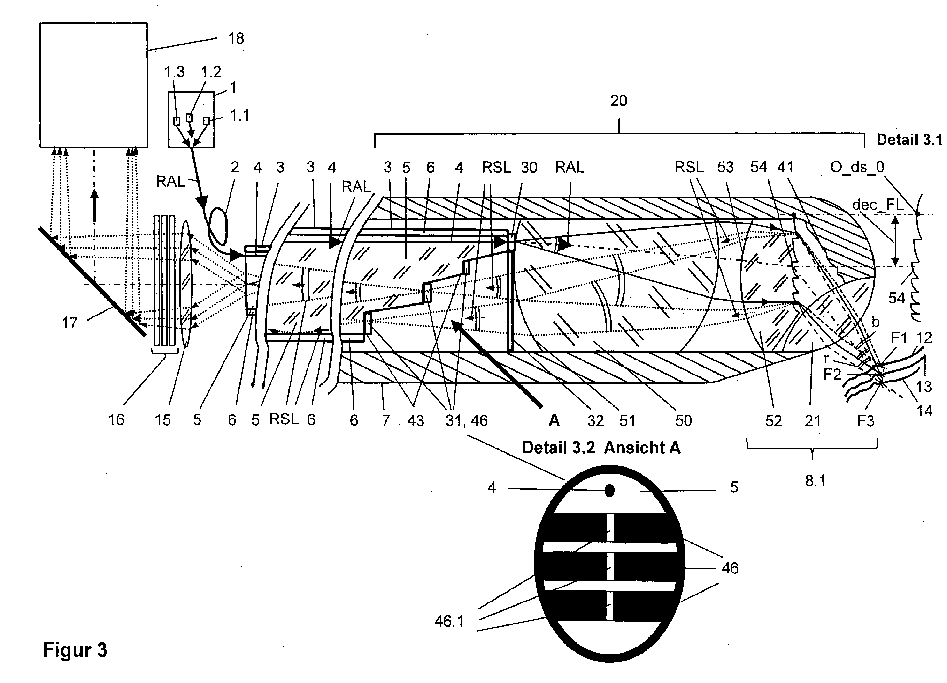

Figur 3 zeigt eine weitere beispielhafte Anordnung zur Raman-spektroskopischen Messung. Diese Anordnung kann insbesondere für bio-spektroskopische Untersuchungen eingesetzt werden, bei denen Objekte mit Schichten 11, 12, 13 in unterschiedlichen Tiefen untersucht werden sollen. In der Anordnung gibt es eine Doppelmantel-Faser 3 mit einem stark dezentriertem Singlemode-Faserkern 4 und einem inneren Mantelbereich 5 als Multi-mode-Wellenleiter. Am Ausgang des Faserkerns 4 ist ein Bandpass-Filter 30 angeordnet, damit nur das Raman-Anregungslicht RAL in die Sonde eintreten kann. Dieses Raman-Anregungslicht RAL wird von der stark dezentrierten refraktiven Linse 30 in Richtung der refraktiven Sammel-Linsenfläche 53 kollimiert und gelangt in den Linsenkörper 52 mit einer stark dezentrierten ebenen Phasen-Positiv-Fresnel-Linse 54. Diese beiden letztgenannten Komponenten kompensieren sich zumindest teilweise in ihrer vergleichsweise großen Brechkraft. Das Detail 3.1 zeigt die stark dezentrierte ebene Phasen-Negativ-Fresnel-Linse 54 mit dem Punkt O_ds_0. Der Punkt entspricht dem Ort der Liniendichte gleich null der Phasen-Fresnel-Linse 54 und stellt den Ort der optischen Achse der Phasen-Fresnel-Linse 54 dar. Dieser liegt außerhalb des optisch genutzten Bereiches Fresnel-Linse 54. Durch die vergleichsweise große Brechkraft der Fresnel-Linse 54 entsteht eine signifikante spektrale Aufspaltung auch mit Tiefenkomponente, welche nach der zentrierten refraktiven Frontlinse 21 zur Fokussierung und damit zur Ausbildung der Foki F1, F2 und F3 in verschiedenen Tiefenlagen im Objektraum führt. Eine vorteilhafte Lösung für die Einkopplung des Raman-Streulichts RSL, welches vom Raman-Anregungslicht RAL durch Diffraktion an der ebenen Phasen-Positiv-Fresnel-Linse 54 separiert wurde, stellt hier das Treppenstufenstück 43 mit den auf jeder einzelnen Mikro-Stufe aufgebrachten Kombinationen 44 aus Spaltblende 46 und Mikro-Bandsperrfilter 31 dar. Die Spalten 46.1, siehe auch Detail 3.2, ermöglichen zumindest eine teilweise konfokale Diskriminierung des Raman-Streulichts RSL. Dabei wird das Anregungs-Licht RAL vom Raman-Streulicht RSL mit dem Mikro-Bandsperrfilter 31, welches nur Raman-Anregungslicht RAL sperrt, ferngehalten. Im Detail 3.2 sind die Mikro-Bandsperrfilter 31, die nur Raman-Anregungslicht RAL sperren, nicht dargestellt.

Figur 4 zeigt eine schematische Darstellung einer Anordnung zur Raman-spektroskopischen Messung gemäß einem dritten Beispiel. Insbesondere ist in Figur 4 dargestellt, wie durch ein Phasengitter 58 auf der ersten Fläche 51 der stark dezentrierten refraktiven Sammellinse 50 die Einkopplung in den Multimode-Innen-Mantelbereich 5 der Doppelmantel-Faser 3 verbessert werden kann. Auf den Multimode-Innen-Mantelbereich 5 ist dazu ein Gitter-Prisma 45 mit variabler Stufenhöhe und Gitterperiode d, s. a. Detail 4.3, angeordnet, dem eine Spaltblenden-Anordnung in Schichtenform 47 mit dem Spalt 47.1 auf dem Multimode-Innen-Mantelbereich 5 vorgeordnet ist.

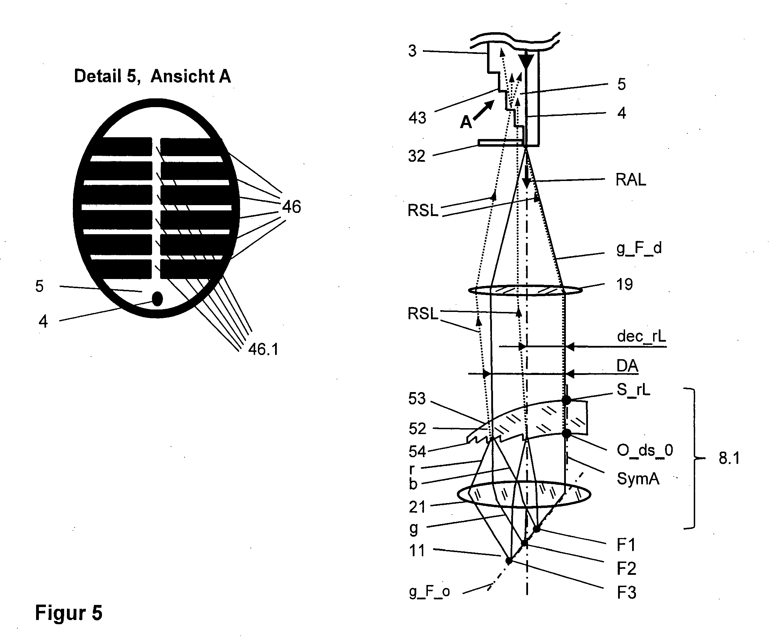

Die Figur 5 präsentiert eine Anordnung, mit der beim Aufbau ein Minimum beim Durchmesser der Sonde erreichen kann. Die durch die konvexe Linsenfläche 53 der refraktiven Sammellinse 52 zumindest näherungsweise kompensierte und stark dezentrierte ebene Phasen-Negativ-Fresnel-Linse 54 ist stark beugend ausgebildet. Die beiden Punkte S_rL und O_ds_0 auf der Linsenfläche 53 und der Fresnel-Linse 54 liegen hierbei auf einer Geraden SymA, die zumindest näherungsweise parallel zur Achse AS der Sonde ist. Alle Foki des Raman-Anregungslichts (RAL) liegen zumindest näherungsweise auf der Geraden g_F_o und alle Foki des Raman-Streulichts RSL liegen zumindest näherungsweise auf der Geraden g_F_d. Die mit r, g und b gekennzeichneten Strahlen stehen nur symbolisch für die unterschiedlichen Wellenlängen des Raman-Anregungslichts. Dabei steht "r" für die längere Wellenlänge und "b" für die kürzere Wellenlänge. Das vom Objekt Raman-gestreute Licht RSL wird weitgehend in den Multi-Mode-Innen-Mantelbereich 5 der Doppelmantelfaser 3 eingekoppelt. Aus zeichentechnischen Gründen ist das Raman-gestreute Licht RSL erst nach der Beugung an der stark dezentrierten ebenen Phasen-Negativ-Fresnel-Linse 54 dargestellt. Eine vorteilhafte Lösung für das Einkoppeln des Raman-gestreuten Lichts RSL stellt hier das Treppenstufenstück 43 mit der Spaltblende 46 mit den Spalten 46.1 dar, siehe auch Detail 5. Dies ermöglicht eine zumindest teilweise konfokale Diskriminierung des Raman-Streulichts RSL. Dabei wird das Anregungs-Licht RAL vom Raman-Streulicht RSL mit dem Makro-Bandsperrfilter 32, welches nur Raman-Anregungslicht RAL sperrt, ferngehalten.

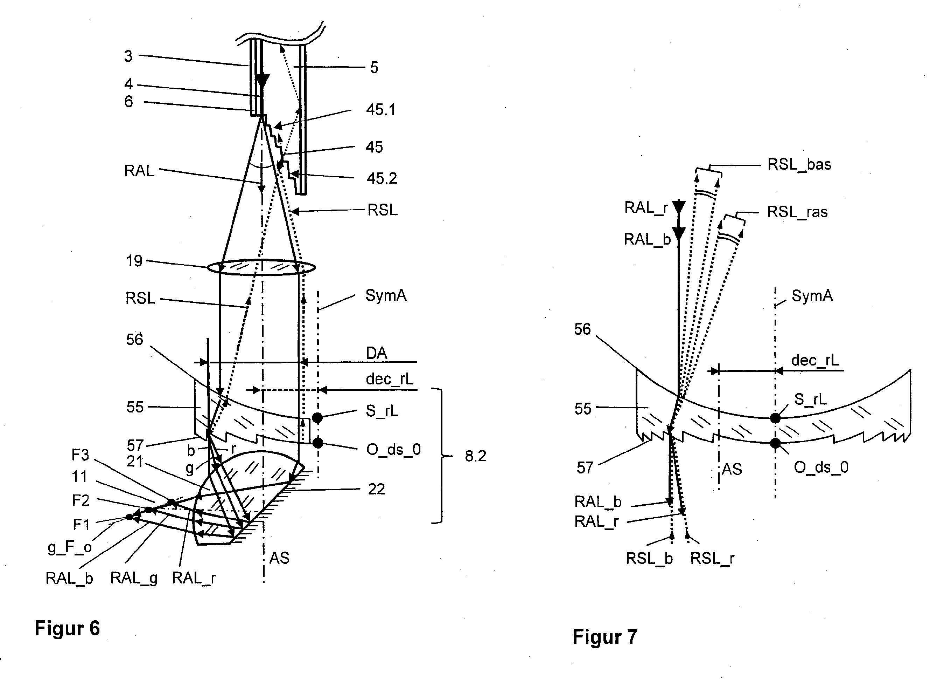

Figur 6 stellt eine Baugruppe für ein Geradeaus-System mit vergleichsweise hoher refraktiver und diffraktiver Brechkraft in Kompensation dar. Es bestehen zumindest näherungsweise gleiche Beträge der Brechkraft für die stark dezentrierte konkave Linsenfläche 56 des Linsenkörpers 55, wobei diese Linsenfläche 56 eine Sphären-ähnliche Freiformfläche darstellt, und für die stark dezentrierte ebene Phasen-Hologramm-Positiv-Fresnel-Linse 57. Um eine hohe Brechkraft zu erreichen, weist der Linsenkörper 55 einen vergleichsweise großen Brechungsindex auf. Die Dezentrierung dec_rL der beiden Komponenten 56 und 57 ist hierbei größer als der halbe Durchmesser DA der genutzten Aperturfläche. Die Brechkräfte der beiden Komponenten 56 und 57 sind entgegengesetzt. Die beiden Punkte S_rL und O_ds_0 auf denselben liegen hierbei auf einer Geraden SymA, die zumindest näherungsweise parallel zur Achse AS der Sonde ist, jedoch außerhalb der Sonde liegt. Dies zeigt Figur 7. Aufgrund der hohen Beugungswirkung der ebenen Phasen-Hologramm-Positiv-Fresnel-Linse 57 ist diese Raman-Sonde auch für Raman-Verschiebungen unter 2000 cm⁻¹ geeignet. Das ist ein typischer Bereich der besonders interessanten Raman-Spektren. Für medizinische Applikationen ist bekanntermaßen insbesondere der Raman-Verschiebungsbereich von 500cm⁻¹ bis 1800cm⁻¹ zu adressieren. Bei Zeng US 7,383,077 B2 wird z.B. der Bereich 700cm⁻¹ bis 1800cm⁻¹ dargestellt, um Hinweise auf Tumorgewebe zu erhalten ("Krebs-Banden"). Bei dieser Anordnung entsteht kein Fokus nullter Ordnung im Objektraum, sondern ein schwacher Fokus weit außerhalb der Frontlinse, so dass dieser Fokus in seiner Wirkung unerheblich ist. Die Freiformfläche der zentrierten refraktiven Frontlinse 21 ist nur Sphären-ähnlich ausgebildet, um die sphärische Aberration zu minimieren.

Die Herstellung der Sonde gemäß Figur 6 und auch weiterer verwendeter mikrooptischer Komponenten kann alternativ zu subtraktiven Verfahren wie z.B. Ätztechniken oder zur klassischer Assemblierung von mikrooptischen Einzelkomponenten, ganz oder teilweise durch additive Fertigung stattfinden. Hierfür bietet sich insbesondere die 2-Photonenlithografie an, mittels derer vergleichbare Komponenten bereits erfolgreich hergestellt und charakterisiert wurden. Diese Technologie ermöglicht prinzipiell durch den hohen Freiheitsgrad in allen drei Dimensionen den Druck von Einzelkomponenten wie z.B. das Gitterprisma 45 in Figur 6, welches auf die Doppelmantelfaser jeweils mittels additiver Fertigung direkt aufgedruckt wird. Auch auf vorgefertigte Linsenkomponenten können diffraktive Strukturen direkt aufgebracht werden, um Gitterlinsen herzustellen. Diese Technologie ermöglicht auch den direkten Druck einer kompletten Sonde, wie sie sich z.B. in Figur 6 darstellt.

Die Figur 7 zeigt noch einmal die Details am Linsenkörper 55. Das auf die stark dezentrierte konkave Linsenfläche 56 einfallende Raman-Anregungslicht RAL_r und RAL b wird nach außen abgelenkt und an der stark dezentrierten ebenen Phasen-Hologramm-Positiv-Fresnel-Linse 57 zumindest teilweise in der Ablenkung kompensiert und dabei spektral aufgespalten. Dabei sind die Linsenfläche 56 und die Phasen-Hologramm-Positiv-Fresnel-Linse 57 auf dem vergleichsweise dünnen Linsenkörper 55 zumindest näherungsweise in der Fourier-Ebene der zentrierten refraktiven Frontlinse 21 angeordnet. Die Dezentrierung dec_rL ist hier größer als der halbe Durchmesser der genutzten Aperturfläche, wodurch sich im Mittel eine starke Strahlablenkung ergibt. Das am hier nicht dargestellten Objekt erzeugte Raman-Streulicht RSL_r und RSL_b gelangt im Rücklauf auf die stark dezentrierte ebene Phasen-Hologramm-Positiv-Fresnel-Linse 57. Es erfolgt eine Ablenkung und auch spektrale Aufspaltung des Raman-Streulichts RSL_bas und RSL_ras. Nach dem Passieren des Linsenkörpers 55 und der Linsenfläche 56 mit kompensierender Ablenkwirkung wird das Raman-Streulicht RSL - wie bereits beschrieben - in den Multimode-Innen-Mantelbereich 5 der Doppelmantelfaser 3 nach erneuter Fokussierung eingekoppelt, s. dazu Figur 6.

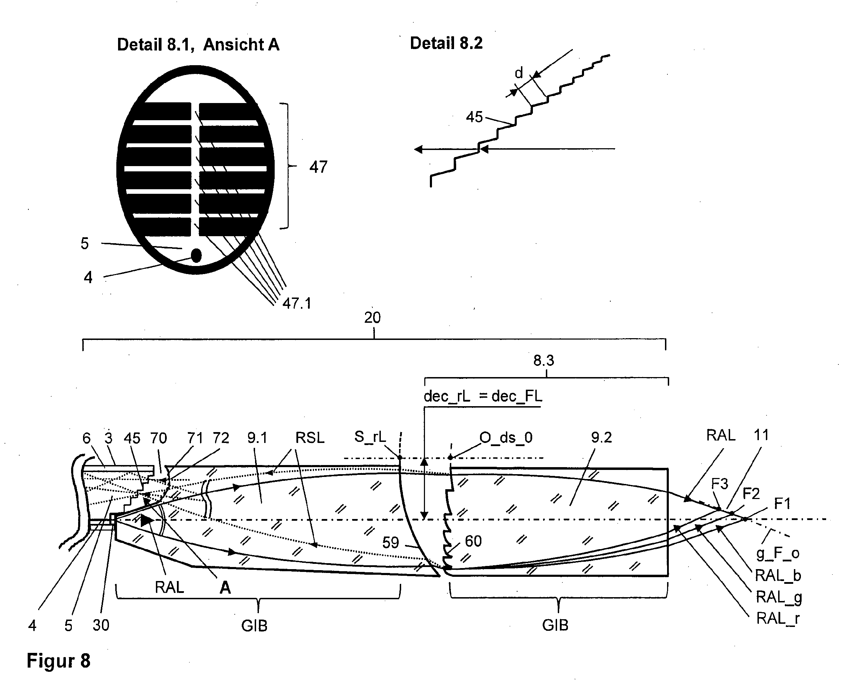

In Figur 8 wird eine Anordnung dargestellt, die ein Minimum für den realisierbaren Sonden-Durchmesser ermöglicht. Die GRIN-Linse 9.1 zur Kollimierung mit nachfolgender dezentrierter Negativ-Linsenfläche 59 erzeugt im Zusammenwirken von GRIN-Linse 9.1 und dezentrierter Negativ-Linsenfläche 59 ein geneigtes divergentes Lichtstrahlenbündel. Dieses wird anschließend von der stark dezentrierten ebenen Phasen-Positiv-Fresnel-Linse 60 mit starker Beugungswirkung erneut kollimiert, wobei auch die Neigung des Bündels durch die Dezentrierung von Fresnel-Linse 60 zumindest teilweise kompensiert wird. Diese Fresnel-Linse 60 befindet sich auf der Eingangsfläche der GRIN-Linse 9.2, welche der Fokussierung von Raman-Anregungslicht RAL_r und RAL_b im Objektraum dient und sich so die Foki F1, F2 und F3 ausbilden. Aus zeichentechnischen Gründen ist das Raman-Streulicht RSL erst nach der Beugung an der stark dezentrierten ebenen Phasen-Positiv-Fresnel-Linse 60 beispielhaft für eine Wellenlänge des Raman-Anregungslichts RAL dargestellt. Die starke Beugung des Raman-Streulichts RSL führt hierbei zu einer guten Entkopplung vom Raman-Anregungslicht RAL, bewirkt aber auch eine starke geometrische Spreizung des Raman-Streulichts RSL in Abhängigkeit von der Wellenzahl. Es besteht hier zumindest näherungsweise eine Kompensation der Brechkraft von dezentrierter Negativ-Linsenfläche 59 und Positiv-Fresnel-Linse 60 für eine Wellenzahl, vorzugsweise für die mittlere Wellenzahl, im Raman-AnregungsSpektrum. Die beiden Komponenten 59 und 60 wirken in unmittelbarer Umgebung der Fourier-Ebene von der zentrierten GRIN-Linse - 9.2 zur Fokussierung. Zur Auskopplung des Raman-Streulichts RSL aus der GRIN-Linse 9.1 ist eine Zestreuungs-Linsenfläche 71 mit einem Phasengitter 72 auf derselben angeordnet, wodurch eine Gitterlinse gebildet ist. Das Phasengitter 72 als auch der Winkel des Gitterprimas 45 und die lokale Gitterperiode d des Gitterprimas 45 sind für einen bestimmten, eingegrenzten Spektralbereich optimiert, hier der Bereich von 1000 cm⁻¹ bis 1400 cm⁻¹, der für die Raman-Spektroskopie zur Tumor-Erkennung bevorzugt genutzt wird. Sowohl das Phasengitter 72 als auch das Gitterprima 45 sind hierbei durch 2-Photonenlithografie nach dem additiven Ansatz hergestellt.

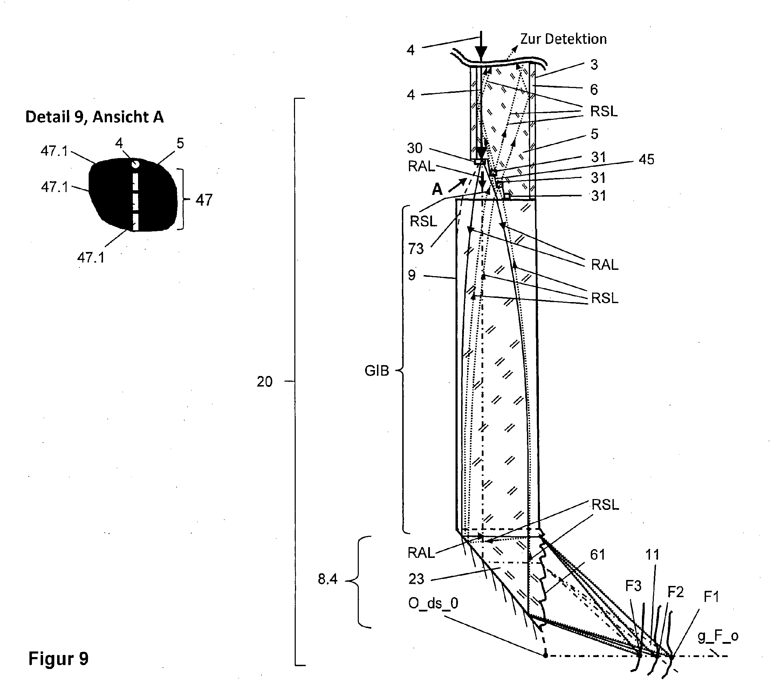

Figur 9 stellt eine kompakte Sonden-Anordnung dar, die eine Ausbildung einer Kette von Foki F1, F2 und F3 im Objektraum 11 ermöglicht. Von weiterem Vorteil ist hier, dass kein Fokus nullter Ordnung im Objektraum 11 entsteht. Des Weiteren erfolgt hier ebenfalls eine zumindest teilweise konfokale Diskriminierung des Raman-Streulichts RSL. Im Detail 9 stellt die Ansicht A die zur konfokalen Diskriminierung benötigte Spaltblenden-Anordnung 47 auf dem inneren Mantel 5 der Doppelmantel-Faser dar.

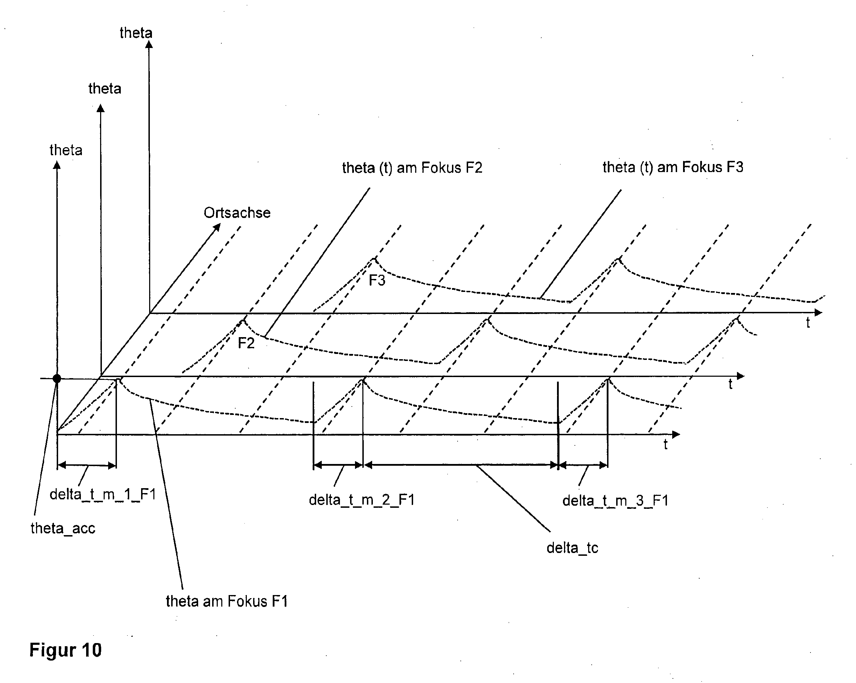

In Figur 10 werden mehrere Messorte im Objektraum in der Tiefe jeweils bis zur für das Messobjekt noch akzeptablen Temperatur theta_acc bestrahlt, um dann bei Erreichen der Temperatur theta_acc anschließend den nächsten Messort zu adressieren. Dann wird nach geeigneter Abkühlung erneut wieder am ersten Messort, also hier am Fokus F1, gemessen. Das ermöglicht die Adressierung mehrerer Messorte in der Tiefe, also hier die Foki F1, F2 oder F3, und somit auch die Adressierung eines größeren Tiefenbereiches. Der Vorteil dieses Ansatzes besteht darin, dass in der Summe eine größere optische Raman-Anregungsleistung in das Gewebe eingebracht werden kann, die örtlich in der Tiefe - beispielsweise in Form von mehreren diskreten Foki - verteilt ist und somit unter dem Gesichtspunkt der Vermeidung einer Gewebeschädigung durch Erhitzen noch akzeptabel ist. Zur Verbesserung des Signal-Rausch-Verhältnisses werden die Spektren aus delta_t_m_1 bis delta_t_m_i_F1 (z. B. i=16) werden in einem Fourier-Spektrometer 18 akkumuliert.

## Patentansprüche

1. Verfahren zur Raman-Spektroskopie mit mindestens einer Raman-Anregungslichtquelle oder einem Raman-Anregungslichtquellen-System (1), mit mindestens einer Fokussier-Optik (8, 8.1, 8.2, 8.3, 8.4) und mit einem Spektrometer (18), wobei die Fokussier-Optik (8, 8.1, 8.2, 8.3, 8.4) sowohl zur Erzeugung fokussierter Raman-Anregungsstrahlung (RAL) zwecks Beleuchtung eines Objektraumes (11) als auch zur Erfassung der unelastisch gestreuten Raman-Strahlung (RSL) aus dem Objektraum (11) ausgebildet ist,
wobei das Verfahren die folgenden Schritte umfasst:
- Bereitstellen monochromatischer oder zumindest quasi-monochromatischer elektromagnetischer Strahlung mittels der Raman-Anregungslichtquelle oder des Raman-Anregungslichtquellen-Systems (1) zur Raman-Anregung zum Bestrahlen
- entweder mit mindestens zwei unveränderlichen diskreten Schwerpunktwellenlängen gleichzeitig;
- oder mit mindestens zwei unveränderlichen diskreten Schwerpunktwellenlängen zeitlich nacheinander;
- oder mit Wellenlängen-Durchstimmung,
- Ausbreiten der Raman-Anregungsstrahlung (RAL) in optischem Kontakt mit einer ersten Einrichtung (10, 54, 57, 60, 61) zur chromatischen Tiefenaufspaltung von Foki oder fokussierten Bereichen,
- Bilden entweder zeitgleich oder zeitlich nacheinander von mindestens zwei räumlich verteilten Foki (F1, F2, F3) oder fokussierten Bereichen durch spektrales Zerlegen mit chromatischer Tiefenaufspaltung im Objektraum (11) mit der ersten Einrichtung zur chromatischen Tiefenaufspaltung (10, 54, 57, 60, 61), wobei die tiefenaufgespaltenen Foki (F1, F2, F3) oder die tiefenaufgespaltenen fokussierten Bereiche der Raman-Anregungsstrahlung (RAL) auch mit lateraler Komponente zur Strahlenausbreitungsrichtung im Objektraum (11) separiert werden;
- Erfassen der unelastisch gestreuten Raman-Strahlung (RSL),
- Zuführen der unelastisch gestreuten Raman-Strahlung (RSL) zum Spektrometer (18),
- Detektieren der unelastisch gestreuten Raman-Strahlung (RSL) mittels des Spektrometers (18)
- und Bestimmen und Auswerten der Signale,
wobei das Bilden von mindestens zwei räumlich verteilten Foki (F1, F2, F3) oder fokussierten Bereichen mit chromatischer Tiefenaufspaltung im Objektraum (11), welche mit lateraler Komponente zur Strahlenausbreitungsrichtung im Objektraum (11) separiert werden erfolgt mittels:
(i) mindestens eines diffraktiv-optischen Elements (10, 54, 57, 60, 61) in der ersten Einrichtung (10, 54, 57, 60, 61) zur chromatischen Tiefenaufspaltung, wobei das diffraktiv-optische Element (54, 57, 60, 61) als eine in Bezug auf die Apertur-Ausdehnung (DA) dezentrierte Fresnel-Linse ausgebildet ist und die Dezentrierung mindestens 10% der maximalen Ausdehnung (DA) der Aperturfläche in der Ebene, in welcher die Dezentrierung besteht, beträgt; oder
(ii) einer hyperchromatisch refraktiven Komponente mit Querversatz in der ersten Einrichtung (10, 54, 57, 60, 61) zur chromatischen Tiefenaufspaltung von Foki oder fokussierten Bereichen; oder
(iii) einer Doppel-Mantel-Faser (3) zur Beleuchtung mit Raman-Anregungsstrahlung (RAL), wobei der Kern (4) der Doppel-Mantel-Faser (3) als Singlemode-Wellenleiter-Bereich und der innere Mantel (5) der Doppel-Mantel-Faser (3) als Multimode-Wellenleiter-Bereich ausgebildet sind, und wobei der Singlemode Faser-Kern (4) der Doppel-Mantel-Faser (3) mindestens um den Radius des Singlemode Faser-Kerns (4) exzentrisch versetzt in der Doppel-Mantel-Faser (3) angeordnet ist.

2. Verfahren zur Raman-Spektroskopie nach Anspruch 1, ferner umfassend ein Passieren von unelastisch gestreuter Raman-Strahlung (RSL) durch mindestens die erste und/oder eine zweite Einrichtung (10, 54, 57, 60, 61) zur chromatischen Tiefenaufspaltung.

3. Verfahren zur Raman-Spektroskopie nach den Ansprüchen 1 oder 2, wobei die an dem Objekt (12, 13, 14) unelastisch gestreute Raman-Strahlung (RSL) zumindest teilweise konfokal diskriminiert wird.

4. Verfahren zur Raman-Spektroskopie nach den Ansprüchen 1 bis 3, wobei:
die Beleuchtung mit Raman-Anregungsstrahlung (RAL) mittels eines Faser-Kernbereichs (4) einer Doppel-Mantel-Faser (3) und das Erfassen von unelastisch gestreuter Raman-Strahlung (RSL) mittels eines inneren Faser-Mantelbereichs (5) dieser Doppel-Mantel-Faser (3) durchgeführt werden; und/oder
eine konfokale Diskriminierung mittels lichtabschattender Elemente (46, 47) zumindest näherungsweise auf einer Querschnittsfläche des inneren Mantels (5) einer Doppel-Mantel-Faser (3) durchgeführt wird.

5. Anordnung zur Raman-Spektroskopie mit mindestens einer Raman-Anregungslichtquelle oder einem Raman-Anregungslichtquellen-System (1), mindestens einer Fokussier-Optik (8, 8.1, 8.2, 8.3, 8.4) und mindestens einem Spektrometer (18) zur Bestimmung von Raman-Spektren, wobei die Fokussier-Optik (8, 8.1, 8.2, 8.3, 8.4) sowohl zur Erzeugung fokussierter Raman-Anregungsstrahlung (RAL) zwecks Beleuchtung des Objektraumes (11) als auch zur Erfassung der unelastisch gestreuten Raman-Strahlung (RSL) aus dem Objektraum (11) ausgebildet ist, wobei:
mindestens eine erste Einrichtung (10, 54, 57, 60, 61) zur chromatischen Tiefenaufspaltung von Foki oder fokussierten Bereichen in der Fokussier-Optik (8, 8.1, 8.2, 8.3, 8.4) angeordnet oder der Fokussier-Optik (8) zugeordnet ist,
wobei die erste Einrichtung (10, 54, 57, 60, 61) zur chromatischen Tiefenaufspaltung von Foki oder fokussierten Bereichen entweder in Transmission, in Reflexion oder in Kombination von Transmission und Reflexion arbeitet,
wobei die erste Einrichtung (10, 54, 57, 60, 61) zur chromatischen Tiefenaufspaltung von Foki oder fokussierten Bereichen eingerichtet ist, die tiefenaufgespaltenen Foki (F1, F2, F3) oder die tiefenaufgespaltenen fokussierten Bereiche der Raman-Anregungsstrahlung (RAL) chromatisch sowohl in der Tiefe als auch in Querrichtung zu separieren; und wobei:
(i) die erste Einrichtung (10, 54, 57, 60, 61) zur chromatischen Tiefenaufspaltung von Foki oder fokussierten Bereichen mit mindestens einem diffraktiv-optischen Element (10, 54, 57, 60, 61) ausgebildet ist, wobei das diffraktiv-optische Element (54, 57, 60, 61) als eine in Bezug auf die Apertur-Ausdehnung (DA) dezentrierte Fresnel-Linse ausgebildet ist und die Dezentrierung mindestens 10% der maximalen Ausdehnung (DA) der Aperturfläche in der Ebene, in welcher die Dezentrierung besteht, beträgt; oder
(ii) die erste Einrichtung (10, 54, 57, 60, 61) zur chromatischen Tiefenaufspaltung von Foki oder fokussierten Bereichen mit mindestens einer hyperchromatisch refraktiven Komponente mit Querversatz ausgebildet ist; oder
(iii) die Anordnung zur Raman-Spektroskopie ferner mindestens eine Doppel-Mantel-Faser (3) umfasst, wobei der Kern (4) der Doppel-Mantel-Faser (3) als Singlemode-Wellenleiter-Bereich und der innere Mantel (5) der Doppel-Mantel-Faser (3) als Multimode-Wellenleiter-Bereich ausgebildet sind, und wobei der Singlemode Faser-Kern (4) der Doppel-Mantel-Faser (3) mindestens um den Radius des Singlemode Faser-Kerns (4) exzentrisch versetzt in der Doppel-Mantel-Faser (3) angeordnet ist.

6. Anordnung zur Raman-Spektroskopie nach mindestens einem der Ansprüche 5, wobei die erste Einrichtung (10, 54, 57, 60, 61) zur chromatischen Tiefenaufspaltung von Foki oder fokussierten Bereichen als eine Kombination von dem mindestens einem diffraktiv-optischen Element (54, 57, 60) und mindestens einer brechkraftkompensierenden refraktiven Komponente (52, 57, 59) ausgebildet ist.

7. Anordnung zur Raman-Spektroskopie nach Anspruch 6, wobei das diffraktiv-optische Element (54, 57, 60, 61) im Strahlengang in Transmission sowohl für Raman-anregende Strahlung (RAL) als auch für unelastisch gestreute Raman-Strahlung (RSL) benutzt wird.

8. Anordnung zur Raman-Spektroskopie nach einem der Ansprüche 5 bis 7, wobei die erste Einrichtung (10, 54, 57, 60, 61) zur chromatischen Tiefenaufspaltung von Foki oder fokussierten Bereichen mit mindestens einem diffraktiv-optischen Element (10, 54, 57, 60, 61) ausgebildet ist, wobei das diffraktiv-optische Element (54, 57, 60, 61) als eine in Bezug auf die Apertur-Ausdehnung (DA) dezentrierte Fresnel-Linse ausgebildet ist, und der dezentrierten Fresnel-Linse (54, 57) mindestens eine Linse (52, 55) oder eine refraktiv wirkende Linsenfläche (53, 56) mit zur Fresnel-Linse (54, 57) entgegen gesetzter Brechkraft zugeordnet ist.

9. Anordnung zur Raman-Spektroskopie nach Anspruch 8, wobei die refraktiv wirkende Linse (52, 55) oder Linsenfläche (53, 56) zur Brechkraftkompensation mindestens um den halben Durchmesser (DA) ihrer Aperturfläche dezentriert ist.

10. Anordnung zur Raman-Spektroskopie nach mindestens einem der Ansprüche 5 bis 9, ferner umfassend mindestens eine Singlemode-Wellenleiter-Faser mit Kern als Singlemode-Wellenleiter-Bereich und eine Multimode-Wellenleiter-Faser mit Kern als Multi-mode-Wellenleiter-Bereich, wobei die Singlemode-Wellenleiter-Faser und die Multimode-Wellenleiter-Faser in geometrischer Parallel-Anordnung angeordnet sind.

11. Anordnung zur Raman-Spektroskopie nach mindestens einem der Ansprüche 5 bis 10, ferner umfassend mindestens eine zumindest näherungsweise spaltförmige Abschattblende, welche auf der Endfläche des Multimode-Wellenleiter-Bereichs angeordnet ist.

12. Anordnung zur Raman-Spektroskopie nach mindestens einem der Ansprüche 5 bis 11, wobei:
die Endfläche des Multimode-Wellenleiter-Bereichs in Form eines Gitter-Prismas (45) ausgebildet ist; und/oder
die Endfläche des Multimode-Wellenleiter-Bereichs als eine gekrümmte Fläche ausgebildet ist.

13. Anordnung zur Raman-Spektroskopie nach mindestens einem der Ansprüche 5 bis 12, ferner umfassend ein Gitter-Prisma (45), welches auf dem Faserende einer Doppelmantel-Faser angeordnet ist.

14. Anordnung zur Raman-Spektroskopie nach einem der Ansprüche 12 oder 13, wobei mindestens eine Spaltblende (46) oder eine Spaltblenden-Anordnung in Schichtenform (47) auf dem Gitter-Prisma (45) oder der gekrümmten Oberfläche des Multimode-Wellenleiter-Bereichs angeordnet ist.

## Claims

1. A Method for Raman spectroscopy with at least one Raman excitation light source or one Raman excitation light source system (1), with at least one focusing optics (8, 8.1, 8.2, 8.3, 8.4) and with one spectrometer (18), wherein the focusing optics (8, 8.1, 8.2, 8.3, 8.4) is formed both for generating focused Raman excitation radiation (RAL) for the purpose of illuminating an object space (11) and for recording of the inelastically scattered Raman radiation (RSL) from the object space (11), wherein the method comprises the following steps:
- providing monochromatic or at least quasi-monochromatic electromagnetic radiation by means of the Raman excitation light source or the Raman excitation light source system (1) for Raman excitation for irradiating
- either with at least two unchangeable discrete centroid wavelengths simultaneously;
- or with at least two unchangeable discrete centroid wavelengths successively;
- or with wavelength sweeping;
- spreading the Raman excitation radiation (RAL) in optical contact with a first device (10, 54, 57, 60, 61) for chromatic splitting in depth of foci or focused areas,
- forming, either simultaneously or successively, at least two spatially distributed foci (F1, F2, F3) or focused areas by means of spectral parsing with chromatic splitting in depth in the object space (11) with the first device for chromatic splitting in depth (10, 54, 57, 60, 61), wherein the depth-split foci (F1, F2, F3) or the depth-split focused areas of the Raman excitation radiation (RAL) are also separated with a lateral component to the radiation propagation direction in the object space (11);
- recording the inelastically scattered Raman radiation (RSL),
- directing the inelastically scattered Raman radiation (RSL) to the spectrometer (18),
- detecting the inelastically scattered Raman radiation (RSL) by means of the spectrometer (18)
- and determining and evaluating the signals,
wherein the forming of at least two spatially distributed foci (F1, F2, F3) or focused areas with chromatic splitting in depth in the object space (11), which are separated with a lateral component to the radiation propagation direction in the object space (11), takes place by means of:
(i) at least one diffractive-optical element (10, 54, 57, 60, 61) in the first device (10, 54, 57, 60, 61) for chromatic splitting in depth, wherein the diffractive-optical element (54, 57, 60, 61) is formed as a Fresnel lens decentered in relation to the aperture expansion (DA) and the decentration is at least 10 % of the maximum expansion (DA) of the aperture surface in the plane in which the decentration exists; or
(ii) a hyperchromatic refractive component with transverse offset in the first device (10, 54, 57, 60, 61) for chromatic splitting in depth of foci or focused areas; or
(iii) a double-clad fiber (3) for illumination with Raman excitation radiation (RAL), wherein the core (4) of the double-clad fiber (3) is formed as a single-mode waveguide area and the inner cladding (5) of the double-clad fiber (3) is formed as multi-mode waveguide area, and wherein the single-mode fiber core (4) of the double-clad fiber (3) is arranged within the double-clad fiber (3), eccentrically offset at least by the radius of the single-mode fiber core (4).

2. The method for Raman spectroscopy according to claim 1, further comprising a passing of inelastically scattered radiation (RSL) through at least the first and/or the second device (10, 54, 57, 60, 61) for chromatic splitting in depth.

3. The method for Raman spectroscopy according to claims 1 or 2, wherein the Raman radiation (RSL) inelastically scattered at the object (12, 13, 14) is at least partially confocally discriminated.

4. The method for Raman spectroscopy according to claims 1 to 3, wherein: the illumination with Raman excitation radiation (RAL) is performed by means of a fiber core area (4) of a double-clad fiber (3), and the recording of inelastically scattered Raman radiation (RSL) is performed by means of an inner fiber cladding area (5) of said double-clad fiber (3); and/or
a confocal discrimination is performed by means of light shading elements (46, 47) at least approximately on a cross section surface of the inner cladding (5) of a double-clad fiber (3).

5. An assembly for Raman spectroscopy with at least one Raman excitation light source or one Raman excitation light source system (1), at least one focusing optics (8, 8.1, 8.2, 8.3, 8.4) and at least one spectrometer (18) for determining Raman spectra, wherein the focusing optics (8, 8.1, 8.2, 8.3, 8.4) is formed both for generating focused Raman excitation radiation (RAL) for the purpose of illuminating the object space (11) and for recording of the inelastically scattered Raman radiation (RSL) from the object space (11), wherein:
at least a first device (10, 54, 57, 60, 61) for chromatic splitting in depth of foci or focused areas is disposed in the focusing optics (8, 8.1, 8.2, 8.3, 8.4) or associated to the focusing optics (8),
wherein the first device (10, 54, 57, 60, 61) for chromatic splitting in depth of foci or focused areas operates either in transmission, in reflection or in combination of transmission and reflection,
wherein the first device (10, 54, 57, 60, 61) for chromatic splitting in depth of foci or focused areas is configured to chromatically separate the depth-split foci (F1, F2, F3) or the depth-split focused areas of the Raman excitation radiation (RAL) both in depth and in transverse direction; and wherein:
(i) the first device (10, 54, 57, 60, 61) for chromatic splitting in depth of foci or focused areas is formed with at least one diffractive-optical element (10, 54, 57, 60, 61), wherein the diffractive-optical element (54, 57, 60, 61) is formed as a Fresnel lens decentered in relation to the aperture expansion (DA) and the decentration is at least 10 % of the maximum expansion (DA) of the aperture surface in the plane in which the decentration exists; or
(ii) the first device (10, 54, 57, 60, 61) for chromatic splitting in depth of foci or focused areas is formed with at least one hyperchromatic refractive component with transverse offset; or
(iii) the assembly for Raman spectrometry further comprises at least one double-clad fiber (3), wherein the core (4) of the double-clad fiber (3) is formed as a single-mode waveguide area and the inner cladding (5) of the double-clad fiber (3) is formed as a multi-mode waveguide area, and wherein the single-mode fiber core (4) of the double-clad fiber (3) is arranged within the double-clad fiber (3), eccentrically offset at least by the radius of the single-mode fiber core (4).

6. The assembly for Raman spectroscopy according to at least one of the claims 5, wherein the first device (10, 54, 57, 60, 61) for chromatic splitting in depth of foci or focused areas is formed as a combination of the at least one diffractive-optical element (54, 57, 60) and at least one optical power compensating refractive component (52, 57, 59).

7. The assembly for Raman spectroscopy according to claim 6, wherein the diffractive-optical element (54, 57, 60, 61) in the ray path in transmission is used both for Raman excitation radiation (RAL) and for inelastically scattered Raman radiation (RSL).

8. The assembly for Raman spectroscopy according to one of the claims 5 to 7, wherein the first device (10, 54, 57, 60, 61) for chromatic splitting in depth of foci or focused areas is formed with at least one diffractive-optical element (10, 54, 57, 60, 61), wherein the diffractive-optical element (54, 57, 60, 61) is formed as a Fresnel lens decentered in relation to the aperture expansion (DA), and at least one lens (52, 55) or one refractively acting lens surface (53, 56) with optical power opposing the Fresnel lens (54, 57) is associated with the Fresnel lens (54, 57).

9. The assembly for Raman spectroscopy according to claim 8, wherein the refractively acting lens (52, 55) or lens surface (53, 56) for the compensation of optical power is decentered by at least half the diameter (DA) of its aperture surface.

10. The assembly for Raman spectroscopy according to at least one of the claims 5 to 9, further comprising at least one single-mode waveguide fiber having a core as a single-mode waveguide area and one multi-mode waveguide fiber having a core as a multi-mode waveguide area, wherein the single-mode waveguide fiber and the multi-mode waveguide fiber are arranged in geometrical parallel arrangement.

11. The assembly for Raman spectroscopy according to at least one of the claims 5 to 10, further comprising at least one at least approximately slit-shaped shading shutter which is disposed on the end surface of the multi-mode waveguide area.

12. The assembly for Raman spectroscopy according to at least one of the claims 5 to 11, wherein:
the end surface of the multi-mode waveguide area is formed in the shape of a grating prism (45); and/or
the end surface of the multi-mode waveguide area is formed as a curved surface.

13. The assembly for Raman spectroscopy according to at least one of the claims 5 to 12, further comprising a grating prism (45) which is disposed on the fiber end of a double-clad fiber.

14. The assembly for Raman spectroscopy according to one of the claims 12 or 13, wherein at least one slit aperture (46) or one slit aperture arrangement in a layered form (47) is arranged on the grating prism (45) or the curved surface of the multi-mode waveguide area.

## Revendications

1. Procédé de spectroscopie Raman avec au moins une source de lumière d'excitation Raman ou un système de sources de lumière d'excitation Raman (1), avec au moins une optique de concentration (8, 8.1, 8.2, 8.3, 8.4) et avec un spectromètre (18), dans lequel l'optique de concentration (8, 8.1, 8.2, 8.3, 8.4) est réalisée aussi bien pour la génération d'un rayonnement d'excitation Raman concentré (RAL) dans le but d'éclairer un espace d'objet (11) que pour le captage du rayonnement Raman diffusé de manière inélastique (RSL) provenant de l'espace d'objet (11),
dans lequel le procédé comprend les étapes suivantes :
- mise à disposition de rayonnement électromagnétique monochromatique ou au moins quasi monochromatique au moyen de la source de lumière d'excitation Raman ou du système de sources de lumière d'excitation Raman (1) pour l'excitation Raman en vue d'irradier
- soit avec au moins deux longueurs d'onde d'intensité discrètes constantes simultanément ;
- soit avec au moins deux longueurs d'onde d'intensité discrètes constantes successivement dans le temps ;
- soit avec accord de longueurs d'onde,
- propagation du rayonnement d'excitation Raman (RAL) en contact optique avec une première installation (10, 54, 57, 60, 61) pour la division de profondeur chromatique de foyers ou de régions concentrées,
- formation soit simultanément, soit successivement dans le temps d'au moins deux foyers répartis spatialement (F1, F2, F3) ou régions concentrées par décomposition spectrale avec division de profondeur chromatique dans l'espace d'objet (11) avec la première installation pour la division de profondeur chromatique (10, 54, 57, 60, 61), dans lequel les foyers divisés en profondeur (F1, F2, F3) ou les régions concentrées divisées en profondeur du rayonnement d'excitation Raman (RAL) sont également séparés avec une composante latérale à la direction de propagation de rayon dans l'espace d'objet (11) ;
- captage du rayonnement Raman diffusé de manière inélastique (RSL),
- acheminement du rayonnement Raman diffusé de manière inélastique (RSL) au spectromètre (18),
- détection du rayonnement Raman diffusé de manière inélastique (RSL) au moyen du spectromètre (18),
- et détermination et évaluation des signaux,
dans lequel la formation d'au moins deux foyers répartis spatialement (F1, F2, F3) ou régions concentrées avec division de profondeur chromatique dans l'espace d'objet (11) qui sont séparés avec une composante latérale à la direction de propagation de rayon dans l'espace d'objet (11) s'effectue au moyen :
(i) d'au moins un élément à optique diffractive (10, 54, 57, 60, 61) dans la première installation (10, 54, 57, 60, 61) pour la division de profondeur chromatique, dans lequel l'élément à optique diffractive (10, 54, 57, 60, 61) est réalisé en tant que lentille de Fresnel décentrée par rapport à l'expansion d'ouverture (DA) et le décentrage se monte à au moins 10 % de l'expansion maximale (DA) du champ d'ouverture dans le plan dans lequel le décentrage existe ; ou
(ii) d'une composante réfractive au niveau hyperchromatique avec décalage transversal dans la première installation (10, 54, 57, 60, 61) pour la division de profondeur chromatique de foyers ou régions concentrées ; ou
(iii) d'une fibre à double enveloppe (3) pour l'éclairage avec le rayonnement d'excitation Raman (RAL), dans lequel le noyau (4) de la fibre à double enveloppe (3) est réalisé en tant que région de guide d'ondes monomodale et l'enveloppe interne (5) de la fibre à double enveloppe (3) est réalisée en tant que région de guide d'ondes multimodale, et dans lequel le noyau de fibre monomodale (4) de la fibre à double enveloppe (3) est disposé dans la fibre à double enveloppe (3) de manière décalée du point de vue excentré au moins du rayon du noyau de fibre monomodale (4).

2. Procédé de spectroscopie Raman selon la revendication 1, comprenant en outre un passage de rayonnement Raman diffusé de manière inélastique (RSL) à travers au moins la première et/ou une seconde installation (10, 54, 57, 60, 61) pour la division de profondeur chromatique.

3. Procédé de spectroscopie Raman selon les revendications 1 ou 2, dans lequel le rayonnement Raman diffusé de manière inélastique (RSL) sur l'objet (12, 13, 14) est discriminé de manière au moins partiellement confocale.

4. Procédé de spectroscopie Raman selon les revendications 1 à 3, dans lequel :
l'éclairage avec le rayonnement d'excitation Raman (RAL) est effectué au moyen d'une région de noyau de fibre (4) d'une fibre à double enveloppe (3) et le captage de rayonnement Raman diffusé de manière inélastique (RSL) est effectuée au moyen d'une région d'enveloppe de fibre interne (5) de cette fibre à double enveloppe (3) ; et/ou
une discrimination confocale au moyen d'éléments dégradant la lumière (46, 47) est effectuée au moins approximativement sur une face de section transversale de l'enveloppe interne (5) d'une fibre à double enveloppe (3).

5. Agencement de spectroscopie Raman avec au moins une source de lumière d'excitation Raman ou un système de sources de lumière d'excitation Raman (1), au moins une optique de concentration (8, 8.1, 8.2, 8.3, 8.4) et au moins un spectromètre (18) pour la détermination de spectres Raman, dans lequel l'optique de concentration (8, 8.1, 8.2, 8.3, 8.4) est réalisée aussi bien pour la génération d'un rayonnement d'excitation Raman concentré (RAL) dans le but d'éclairer l'espace d'objet (11) que pour le captage du rayonnement Raman diffusé de manière inélastique (RSL) provenant de l'espace d'objet (11), dans lequel :
au moins une première installation (10, 54, 57, 60, 61) pour la division de profondeur chromatique de foyers ou de régions concentrées est disposée dans l'optique de concentration (8, 8.1, 8.2, 8.3, 8.4) ou est associée à l'optique de concentration (8),
dans lequel la première installation (10, 54, 57, 60, 61) pour la division de profondeur chromatique de foyers ou de régions concentrées fonctionne en transmission, en réflexion ou en combinaison de transmission et réflexion,
dans lequel la première installation (10, 54, 57, 60, 61) pour la division de profondeur chromatique de foyers ou de régions concentrées est configurée pour séparer les foyers divisés en profondeur (F1, F2, F3) ou les régions concentrées divisées en profondeur du rayonnement d'excitation Raman (RAL) de manière chromatique aussi bien dans la profondeur que dans la direction transversale ; et
dans lequel :
(i) la première installation (10, 54, 57, 60, 61) pour la division de profondeur chromatique de foyers ou de régions concentrées est réalisée avec au moins un élément à optique diffractive (10, 54, 57, 60, 61), dans lequel l'élément à optique diffractive (10, 54, 57, 60, 61) est réalisé en tant que lentille de Fresnel décentrée par rapport à l'expansion d'ouverture (DA) et le décentrage se monte à au moins 10 % de l'expansion maximale (DA) du champ d'ouverture dans le plan dans lequel le décentrage existe ; ou
(ii) la première installation (10, 54, 57, 60, 61) pour la division de profondeur chromatique de foyers ou de régions concentrées est réalisée avec au moins une composante réfractive au niveau hyperchromatique avec décalage transversal ; ou
(iii) l'agencement de spectroscopie Raman comprend en outre au moins une fibre à double enveloppe (3), dans lequel le noyau (4) de la fibre à double enveloppe (3) est réalisé en tant que région de guide d'ondes monomodale et l'enveloppe interne (5) de la fibre à double enveloppe (3) est réalisée en tant que région de guide d'ondes multimodale, et dans lequel le noyau de fibre monomodale (4) de la fibre à double enveloppe (3) est disposé dans la fibre à double enveloppe (3) de manière décalée du point de vue excentré au moins du rayon du noyau de fibre monomodale (4).

6. Agencement de spectroscopie Raman selon au moins une des revendications 5, dans lequel la première installation (10, 54, 57, 60, 61) pour la division de profondeur chromatique de foyers ou de régions concentrées est réalisée en tant que combinaison de l'au moins un élément à optique diffractive (54, 57, 60) et d'au moins une composante réfractive à compensation de réfringence (52, 57, 59).

7. Agencement de spectroscopie Raman selon la revendication 6, dans lequel l'élément à optique diffractive (54, 57, 60, 61) dans la trajectoire des rayons est utilisé en transmission aussi bien pour un rayonnement à excitation Raman (RAL) que pour un rayonnement Raman diffusé de manière inélastique (RSL).

8. Agencement de spectroscopie Raman selon une des revendications 5 à 7, dans lequel la première installation (10, 54, 57, 60, 61) pour la division de profondeur chromatique de foyers ou de régions concentrées est réalisée avec au moins un élément à optique diffractive (10, 54, 57, 60, 61), dans lequel l'élément à optique diffractive (10, 54, 57, 60, 61) est réalisé en tant que lentille de Fresnel décentrée par rapport à l'expansion d'ouverture (DA), et au moins une lentille (52, 55) ou une face de lentille (53, 56) à action réfractive avec une réfringence opposée à la lentille de Fresnel (54, 57) est associée à la lentille de Fresnel décentrée (54, 57).

9. Agencement de spectroscopie Raman selon la revendication 8, dans lequel la lentille (52, 55) à action réfractive ou face de lentille (53, 56) pour la compensation de réfringence est décentrée au moins de la moitié du diamètre (DA) de son champ d'ouverture.

10. Agencement de spectroscopie Raman selon au moins une des revendications 5 à 9, comprenant en outre au moins une fibre de guide d'ondes monomodale avec noyau en tant que région de guide d'ondes monomodale et une fibre de guide d'ondes multimodale avec noyau en tant que région de guide d'ondes multimodale, dans lequel la fibre de guide d'ondes monomodale et la fibre de guide d'ondes multimodale sont disposées dans un agencement parallèle géométrique.

11. Agencement de spectroscopie Raman selon au moins une des revendications 5 à 10, comprenant en outre au moins un diaphragme de dégradation au moins approximativement en forme de fente qui est disposé sur la face d'extrémité de la région de guide d'ondes multimodale.

12. Agencement de spectroscopie Raman selon au moins une des revendications 5 à 11, dans lequel :
la face d'extrémité de la région de guide d'ondes multimodale est réalisée sous la forme d'un réseau-prisme (45) ; et/ou
la face d'extrémité de la région de guide d'ondes multimodale est réalisée en tant que face courbée.

13. Agencement de spectroscopie Raman selon au moins une des revendications 5 à 12, comprenant en outre un réseau-prisme (45) qui est disposé sur l'extrémité de fibre d'une fibre à double enveloppe.

14. Agencement de spectroscopie Raman selon une des revendications 12 ou 13, dans lequel au moins un diaphragme à fente (46) ou un agencement de diaphragmes à fente est disposé sous forme de couches (47) sur le réseau-prisme (45) ou la surface courbée de la région de guide d'ondes multimodale.
